(19) Europäisches Patentamt
European Patent Office
Office européen des brevets

(11) EP 4 748 863 A1

(12) EUROPEAN PATENT APPLICATION
published in accordance with Art. 153(4) EPC

(43) Date of publication:
27.05.2026 Bulletin 2026/22

(21) Application number: 24843168.6

(22) Date of filing: 18.07.2024

(51) International Patent Classification (IPC):
C08F 2/16 (2006.01)     C08F 2/44 (2006.01)
C08F 214/26 (2006.01)     C08F 216/14 (2006.01)

(52) Cooperative Patent Classification (CPC):
C08F 2/16; C08F 2/44; C08F 214/26; C08F 216/14

(86) International application number:
PCT/JP2024/025755

(87) International publication number:
WO 2025/018379 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.07.2023 JP 2023117444

(71) Applicant: AGC Inc.
Chiyoda-ku
Tokyo 100-8405 (JP)

(72) Inventors:
• YANAGIYA Aoi
Tokyo 100-8405 (JP)

• SHIBASAKI Kosuke
Tokyo 100-8405 (JP)
• HATTORI Yukiko
Tokyo 100-8405 (JP)
• TOYODA Mizuna
Tokyo 100-8405 (JP)
• TAGUCHI Daisuke
Tokyo 100-8405 (JP)
• TAMURA Tasuku
Tokyo 100-8405 (JP)
• KAMIMORI Koichiro
Tokyo 100-8405 (JP)

(74) Representative: Müller-Boré & Partner
Patentanwälte PartG mbB
Friedenheimer Brücke 21
80639 München (DE)

(54) METHOD FOR PRODUCING FLUOROELASTOMER, AQUEOUS DISPERSION, AND SOLID COMPOSITION

(57) To provide a method for producing a fluorinated elastomer, by which a fluorinated polymer excellent in water dispersion stability can be efficiently produced without using an emulsifier, while an aqueous medium with a small environmental impact is used. A method for producing a fluorinated elastomer, which comprises, in an aqueous dispersion that contains substantially no water-soluble emulsifier, and contains a first fluorinated polymer having TFE units and PAVE units and an aqueous medium, polymerizing a monomer containing TFE and PAVE to produce a second fluorinated polymer, wherein in the first fluorinated polymer, a content of the PAVE units is 20 to 95 mol% to a total content of the TFE units and the PAVE units, in the second fluorinated polymer, a content of the PAVE units is 20 to 95 mol% to a total content of the TFE units and the PAVE units, and before start of the polymerization of the monomer, a content of the first fluorinated polymer is 0.01 to 4.0 mass% to a total mass of the aqueous dispersion.

EP 4 748 863 A1

**Description**

TECHNICAL FIELD

The present invention relates to a method for producing a fluorinated elastomer, an aqueous dispersion, and a solid composition.

BACKGROUND ART

Fluorinated polymers, which are excellent in heat resistance, chemical resistance, flame retardance, weather resistance, etc., are used in various industrial fields.

As a method for producing a fluorinated elastomer, a method of emulsion-polymerizing a fluorinated monomer in an aqueous medium using an emulsifier may be mentioned (Patent Document 1).

PRIOR ART DOCUMENTS

PATENT DOCUMENTS

Patent Document 1: WO2022/052498

DISCLOSURE OF INVENTION

TECHNICAL PROBLEM

The method for producing a fluorinated elastomer in Patent Document 1, which uses an aqueous medium, has a small environmental impact, however, if the emulsifier as an essential component remains in a large amount in the aqueous dispersion obtained by polymerization, removal of the emulsifier is necessary depending upon the application.

Further, it is also required that the obtainable fluorinated elastomer is excellent in water dispersion stability.

An object of the present invention is to provide a method for producing a fluorinated elastomer, by which a fluorinated elastomer excellent in water dispersion stability can be efficiently produced without using an emulsifier, while an aqueous medium with a small environmental impact is used.

Another object of the present invention is to provide an aqueous dispersion and a solid composition.

SOLUTION TO PROBLEM

The present inventors have conducted extensive studies and as a result found that the above objects can be achieved by the following constitution.

[1] A method for producing a fluorinated elastomer, which comprises,

in an aqueous dispersion that contains substantially no water-soluble emulsifier, and contains a first fluorinated polymer having units based on tetrafluoroethylene and units based on a perfluoro(alkyl vinyl ether) and an aqueous medium,
polymerizing a monomer containing tetrafluoroethylene and a perfluoro(alkyl vinyl ether) to produce a second fluorinated polymer,
wherein
in the first fluorinated polymer, a content of the units based on a perfluoro(alkyl vinyl ether) is 20 to 95 mol% to a total content of the units based on tetrafluoroethylene and the units based on a perfluoro(alkyl vinyl ether),
in the second fluorinated polymer, a content of the units based on a perfluoro(alkyl vinyl ether) is 20 to 95 mol% to a total content of the units based on tetrafluoroethylene and the units based on a perfluoro(alkyl vinyl ether), and
before start of the polymerization of the monomer, a content of the first fluorinated polymer is 0.01 to 4.0 mass% to a total mass of the aqueous dispersion.

[2] The method for producing a fluorinated elastomer according to [1],
wherein

the monomer consists solely of tetrafluoroethylene and a perfluoro(alkyl viny ether), or
the monomer comprises tetrafluoroethylene and a perfluoro(alkyl viny ether) and contains at least one type of monomer selected from the groups consisting of a monomer having two or more polymerizable unsaturated bonds, a monomer having one or more of at least one type of atom selected from the group consisting of a chlorine atom, a bromine atom and an iodine atom, and a monomer having a nitrile group.

[3] The method for producing a fluorinated elastomer according to [1] or [2], wherein the amount of the monomer used is 1 to 80 parts by mass per 100 parts by mass of the aqueous medium used.

[4] The method for producing a fluorinated elastomer according to any one of [1] to [3], wherein the monomer is polymerized in the presence of a polymerization initiator.

[5] An aqueous dispersion, which contains an aqueous medium and particles containing a fluorinated polymer, wherein

the particles have an average particle size of 1 $\mu$m or less,

the particles have units based on tetrafluoroethylene and units based on a perfluoro(alkyl vinyl ether),

the fluorinated polymer has at least one of a chlorine atom, a bromine atom, an iodine atom and a nitrile group in at least one of terminal ends and side chains, and

the content of an emulsifier is 100 mass ppm or less to the total mass of the aqueous dispersion.

[6] The aqueous dispersion according to [5], wherein

the particles have as units only the units based on tetrafluoroethylene and the units based on a perfluoro(alkyl vinyl ether), or

the particles have the units based on tetrafluoroethylene and the units based on a perfluoro(alkyl vinyl ether), and have at least one type of units selected from the group consisting of units based on a monomer having two or more polymerizable unsaturated bonds, units based on a monomer having one or more of at least one type of atom selected from the group consisting of a chlorine atom, a bromine atom and an iodine atom, and units based on a monomer having a nitrile group.

[7] A solid composition comprising a fluorinated polymer,

which has units based on tetrafluoroethylene and units based on a perfluoro(alkyl vinyl ether),

contains substantially no emulsifier, and

has a storage elastic modulus G' of 200 to 1200 kPa.

[8] The solid composition according to [7], wherein the fluorinated polymer has at least one of a chlorine atom, a bromine atom, an iodine atom and a nitrile group in at least one of terminal ends and side chains.

[9] A crosslinked rubber article, which is formed by crosslinking the solid composition as defined in [8].

ADVANTAGEOUS EFFECTS OF INVENTION

According to the present invention, it is possible to provide a method for producing a fluorinated elastomer, by which a fluorinated elastomer excellent in water dispersion stability can be efficiently produced without using an emulsifier, while an aqueous medium with a small environmental impact is used.

Further, according to the present invention, it is possible to provide an aqueous dispersion and a solid composition.

DESCRIPTION OF EMBODIMENTS

Meanings of terms in the present invention are as follows.

" to " used to show a range of numerical values is used to include numerical values before and after it as the lower limit value and the upper limit value. In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples. In this specification, as each component, a single type of a substance corresponding to the component may be used alone, or two or more types may be used in combination. In a case where two or more types are used in combination for each component, the content of the component means the total content of the substances used in combination, unless otherwise specified.

In this specification, a combination of two or more preferred embodiments corresponds to a more preferred embodiment.

"Units" generically mean an atomic group derived from one molecule of a monomer, directly formed by polymerization of the monomer, and an atomic group obtained by chemical conversion of a part of the atomic group. "Units based on a monomer" may sometimes be referred to simply as "units".

The content (mass% or mol%) of each units based on all units which a polymer has, is obtained by analyzing the polymer by nuclear magnetic resonance spectroscopy (NMR). Usually, the content of each units calculated from the amount of charge of each monomer, substantially agrees with the actual content of each units.

A "fluorinated elastomer" is an elastic fluorinated copolymer having no melting point, which has a storage elastic modulus G' of 80 or more as measured in accordance with ASTM D6204 at 100°C at 50 cpm, and is distinguished from a fluororesin.

[Method for producing fluorinated elastomer]

The method for producing a fluorinated elastomer of the present invention (hereinafter sometimes referred to as "the present production method") is a method for producing a fluorinated elastomer, which comprises,

in an aqueous dispersion (hereinafter sometimes referred to as "first aqueous dispersion") that contains substantially no emulsifier and contains a first fluorinated polymer having units based on tetrafluoroethylene and units based on a perfluoro(alkyl vinyl ether), and an aqueous medium,
polymerizing a monomer containing tetrafluoroethylene and a perfluoro(alkyl vinyl ether) (hereinafter sometimes referred to as "specific monomer") to produce a second fluorinated,
wherein
in the first fluorinated polymer, the content of the units based on a perfluoro(alkyl vinyl ether) is 20 to 95 mol% to the total content of the units based on tetrafluoroethylene and the units based on a perfluoro(alkyl vinyl ether),
in the second fluorinated polymer, the content of the units based on a perfluoro(alkyl vinyl ether) is 20 to 95 mol% to the total content of the units based on tetrafluoroethylene and the units based on a perfluoro(alkyl vinyl ether), and
before start of the polymerization of the monomer, the content of the first fluorinated polymer is 0.01 to 4.0 mass% to the total mass of the aqueous dispersion.

The reason as to why the fluorinated elastomer excellent in water dispersion stability can be efficiently produced without using an emulsifier by the present production method, is estimated that since an aqueous dispersion containing a predetermined amount of the first fluorinated polymer that has the respective units in predetermined proportions is used, in polymerization of the raw material monomer for the second fluorinated polymer, the first fluorinated polymer functions as a favorable polymerization site for the second fluorinated polymer, whereby desired effects are obtained.

According to the present production method, even without using an emulsifier, a fluorinated elastomer having physical properties equal to or higher than those of a fluorinated elastomer produced by using an emulsifier can be obtained.

<Aqueous dispersion>

In the present production method, the first aqueous dispersion that contains substantially no water-soluble emulsifier and contains the first fluorinated polymer and an aqueous medium is used.

(Emulsifier)

The first aqueous dispersion contains substantially no water-soluble emulsifier.

"Containing substantially no water-soluble emulsifier" means that in the first aqueous dispersion, the content of the water-soluble emulsifier is 10 mass ppm or less to the total mass of the first aqueous dispersion, and is preferably 100 mass ppb or less, more preferably 50 mass ppb or less. It is also preferably the quantitative determination limit or less in the measurement method in Examples. The lower limit may be 1 mass ppb.

The content of the water-soluble emulsifier may be measured by using a liquid chromatography mass spectrometer. Specifically, the measurement method as described in WO2018/181904, paragraphs 0721 to 0732 may be mentioned, and the measurement method described in Examples is preferred.

The water-soluble emulsifier means an emulsifier with a solubility of 100 mg or more in 1000 g of water at 25°C.

The water-soluble emulsifier may be a water-soluble one among hydrocarbon-containing surfactants, fluorinated emulsifiers and polymer emulsifiers.

Neither the after-described first fluorinated polymer nor the after-described second fluorinated polymer corresponds to the water-soluble emulsifier.

The water-soluble emulsifier may be either ionic or non-ionic.

The hydrocarbon-containing surfactant is a surfactant containing a hydrocarbon. More specifically, at least some of monovalent substituents of carbon atoms are hydrogen atoms, and they may be replaced with halogen atoms such as a fluorine atom or a chlorine atom. In the hydrocarbon-containing surfactant, it is preferred that 75% or more of the monovalent substituents bonded to the carbon atoms are hydrogen atoms, more preferably 85% or more are hydrogen atoms, further preferably 95% or more are hydrogen atoms.

The hydrocarbon-containing surfactant may be a hydrocarbon surfactant or a siloxane surfactant. The hydrocarbon surfactant means a surfactant that contains no halogen atom such as a chlorine atom or a fluorine atom, which contains no silicon atom and in which 100% of the monovalent substituents bonded to the carbon atoms are hydrogen atoms. The siloxane surfactant means a hydrocarbon-containing surfactant that has a hydrophobic group containing a siloxane skeleton with a large number of siloxane units.

As the hydrocarbon surfactant, an anionic hydrocarbon surfactant may be mentioned.

The anionic hydrocarbon surfactant means a hydrocarbon surfactant having a negatively charged hydrophilic moiety such as a carboxylic acid group, a sulfonic acid group, a sulfuric acid group, a phosphonic acid group or a phosphoric acid group, and a hydrocarbon moiety such as an alkyl group as a hydrophobic moiety.

An example of the anionic hydrocarbon surfactant may be a highly branched C10 tertiary carboxylic acid available as Versatic (registered trademark) 10 from Resolution Performance Products. Another example of the anionic hydrocarbon surfactant may be sodium linear alkyl polyether sulfonate available as Avanel (registered trademark) S series from BASF.

The anionic hydrocarbon surfactant may also be sodium dodecyl sulfate.

Another example of the anionic hydrocarbon surfactant may be a sulphosuccinate surfactant Lankropol (registered trademark) K8300 available from Akzo Nobel Surface Chemistry LLC.

As the hydrocarbon surfactant, a nonionic hydrocarbon surfactant may also be mentioned.

The nonionic hydrocarbon surfactant has no charged group but has a hydrophobic moiety which is in many cases a long chain hydrocarbon. The hydrophilic moiety of the nonionic hydrocarbon surfactant may be a water-soluble functional group such as a polyethylene oxide chain obtained by polymerization of ethylene oxide. The nonionic hydrocarbon surfactant may be a block copolymer having various types of polyalkylene oxide blocks, for example polyethylene oxide and polypropylene oxide blocks.

As the nonionic hydrocarbon surfactant, surfactants described in JP-A-2016-537499, paragraphs [0043] to [0052] may be mentioned.

As the siloxane surfactant, surfactants described in US Patent No. 6,841,616 (Wille et al) and in US Patent No. 7,977,438 (Brothers et al) may be mentioned.

As the fluorinated emulsifier, an anionic fluorinated surfactant may be mentioned.

As the anionic fluorinated surfactant, a surfactant having a total number of carbon atoms of 20 or less in a moiety excluding the anionic group and containing a fluorine atom, and a surfactant having an anionic moiety with a molecular weight of 800 or less and containing a fluorine atom may be mentioned. The "anionic moiety" means a moiety excluding cations of the fluorinated surfactant.

As the polymer emulsifier, a polymer which is water-soluble and which has a hydrophilic group in its side chain may be mentioned. Such a polymer emulsifier may be a polymer having units based on a compound that has a moiety reactive by polymerization and a hydrophilic group. A polymer, obtained by subjecting a polymer having units based on a compound that has a group capable of being converted to a hydrophilic group, which originally has no hydrophilic group, to a post treatment such as hydrolysis, may also be mentioned.

The first aqueous dispersion preferably contains substantially no emulsifier represented by any of the formulae (S1) to (S4). In a case where no emulsifier is used at the time of production of the first fluorinated polymer contained in the first aqueous dispersion, the amount of formation of the compound represented by any of the formulae (S1) to (S4) can be suppressed, and the content of such a compound can readily be adjusted.

$$H\text{-}(CF_2)_{n1}\text{-}COOM \quad (S1)$$

$$F\text{-}(CF_2)_{n1}\text{-}COOM \quad (S2)$$

$$H\text{-}(CF_2)_{n2}\text{-}SO_3M \quad (S3)$$

$$F\text{-}(CF_2)_{n2}\text{-}SO_3M \quad (S4)$$

In the formulae (S1) to (S4),

n1 is an integer of 3 to 19,

n2 is an integer of 4 to 20, and
M is each independently a hydrogen atom, Na, K or $NH_4$.

(First fluorinated polymer)

The first fluorinated polymer has units based on tetrafluoroethylene (hereinafter sometimes referred to as "TFE") and units based on a perfluoro(alkyl vinyl ether) (hereinafter sometimes referred to as "PAVE").

It is estimated that the first fluorinated polymer adsorbs and includes the specific monomer at the hydrophobic moiety at the time of polymerization of the specific monomer to solubilize the specific monomer even without an emulsifier, and makes the specific monomer to be readily polymerized. It is also estimated that the first fluorinated polymer contributes to dispersion-stability of the after-described particles, etc. in the aqueous dispersion.

PAVE is preferably a monomer represented by the formula (1), whereby excellent polymerizability in production of the first fluorinated polymer is achieved, and the second fluorinated polymer can be produced more efficiently.

$$CF_2=CF-O-R^{f1} \qquad (1)$$

In the formula (1), $R^{f1}$ is a $C_{1-10}$ perfluoroalkyl group. The carbon number of $R^{f1}$ is preferably 1 to 8 in view of more excellent polymerizability, more preferably 1 to 6, further preferably 1 to 5, particularly preferably 1 to 3.

The perfluoroalkyl group may be linear or may be branched.

Specific examples of PAVE include perfluoro(methyl vinyl ether) (hereinafter sometimes referred to as "PMVE"), perfluoro(ethyl vinyl ether) (hereinafter sometimes referred to as "PEVE") and perfluoro(propyl vinyl ether) (hereinafter sometimes referred to as "PPVE"), and preferred are PMVE and PPVE, whereby the second fluorinated polymer can be produced more efficiently, and more preferred is PMVE.

In the first fluorinated polymer, the content of the PAVE units to the total amount of the TFE units and the PAVE units is 20 to 95 mol%, preferably 20 to 60 mol%, and preferably 25 to 60 mol%, more preferably 25 to 55 mol%, whereby the second fluorinated polymer can be produced more efficiently.

In the first fluorinated polymer, the total content of the TFE units and the PAVE units is preferably 99.0 to 100.0 mol%, more preferably 99.5 to 100.0 mol%, further preferably 99.9 to 100.0 mol%, to all units in the first fluorinated polymer.

The first fluorinated polymer may have units based on a monomer other than TFE and PAVE, or it may have substantially no units based on other monomer, whereby the second fluorinated polymer can be produced more efficiently.

"Having substantially no units based on other monomer" means that the content of the units based on other monomer is 0.01 mol% or less to all units in the first fluorinated polymer, and is preferably 0 mol%.

Before start of the polymerization of the monomer to be polymerized for production of the second fluorinated polymer, the content of the first fluorinated polymer is, to the total mass of the first aqueous dispersion, 0.01 to 4.0 mass%, and preferably 0.01 to 0.6 mass%, more preferably 0.01 to 0.5 mass%, whereby the second fluorinated polymer can be produced more efficiently.

In this specification, "before start of the polymerization of the monomer to be polymerized for production of the second fluorinated polymer" means immediately before the polymerization start point. The "polymerization start point" may, for example, be a point when the monomer and a polymerization initiator are made to coexist in a reactor after the internal temperature of the reactor reaches the polymerization temperature or higher, and a point when the internal temperature of a reactor reaches the polymerization temperature or higher after the monomer and a polymerization initiator are made to coexist in the reactor.

Before start of the polymerization of the monomer to be polymerized for production of the second fluorinated polymer, the first aqueous dispersion contains no monomer nor polymerization initiator to be used for production of the second fluorinated polymer.

The content (solid content concentration) of the first fluorinated polymer may be measured for example by the following method.

The content (solid content concentration) of the first fluorinated polymer in the first aqueous dispersion is calculated in accordance with the following formula in such a manner that 2.0 g of the first aqueous dispersion is heated at 170°C for 20 minutes and the mass of the residue is weighed.

Solid content concentration (mass%)=100 × residue (g) after heating the first aqueous dispersion/mass (2.0 g) of first aqueous dispersion"

The method for producing the first fluorinated polymer is preferably a method of polymerizing the monomer containing TFE and PAVE in an aqueous medium in the presence of a polymerization initiator. By such a method, the first fluorinated polymer dispersed in the form of particles in the aqueous medium can be obtained.

The aqueous medium having the particles of the first fluorinated polymer dispersed thus obtained may be used as it is as the first aqueous dispersion, or may further be mixed with another aqueous medium and used as the first aqueous dispersion. Otherwise, the first fluorinated polymer may be dispersed in another aqueous medium by solvent replacement, and the dispersion may be used as the first aqueous dispersion.

The polymerization initiator used for production of the first fluorinated polymer is preferably a water-soluble polymerization initiator, more preferably a persulfate such as ammonium persulfate, sodium persulfate or potassium persulfate, or an organic polymerization initiator such as disuccinic peroxide or azobisisobutylamidine dihydrochloride, more preferably a persulfate, particularly preferably ammonium persulfate.

The aqueous medium used for production of the first fluorinated polymer may be water or a solvent mixture of water and a water-soluble organic solvent. Specific examples of the water-soluble organic solvent include tert-butanol, propylene glycol, dipropylene glycol, dipropylene glycol monomethyl ether and tripropylene glycol.

In production of the first fluorinated polymer, it is preferred that substantially no emulsifier is contained.

The definitions of the emulsifier (e.g. the type of the emulsifier, and the wording "containing substantially no") are as defined above.

It is preferred that a purification treatment to reduce or deactivate the polymerization initiator and its decomposed product in the aqueous dispersion that contains particles containing the first fluorinated polymer, and then the aqueous dispersion is used for polymerization to obtain the second fluorinated polymer.

In the purification treatment, the polymerization initiator and its decomposed product which may be contained in the aqueous dispersion that contains the first fluorinated polymer are removed, whereby the second fluorinated polymer having desired physical properties is likely to be obtained.

The purification method may be a heat treatment or a removal method using an ion exchange resin (preferably an anion exchange resin).

The purification treatment may be conducted several times.

(Aqueous medium)

The aqueous dispersion used in the present production method contains an aqueous medium. The aqueous medium contained in the first aqueous dispersion may be the polymerization solvent used at the time of production of the first fluorinated polymer, as described above. Specific examples of the aqueous medium contained in the first aqueous dispersion are the same as the specific examples of the aqueous medium used for production of the first fluorinated polymer.

Before start of the polymerization of the monomer to be polymerized for production of the second fluorinated polymer, the content of the aqueous medium is, to the total mass of the first aqueous dispersion, preferably 60 to 99.9 mass%, more preferably 96 to 99.9 mass%, further preferably 98 to 99.9 mass%.

(Other component)

The first aqueous dispersion may contain a component other than the first fluorinated polymer and the aqueous medium.

Specific examples of the other component which the first aqueous dispersion may contain, include a chain transfer agent, a reducing agent and a pH adjusting agent.

Specific examples of the chain transfer agent include ethyl acetate, methanol, ethanol, t-butyl methyl ether, diether ether, n-pentane, cyclohexane, methane and propane. As the chain transfer agent, a compound represented by the after-described formula (I) may also be mentioned.

Specific examples of the reducing agent include sulfurous acid or its salt, bisulfite salt, thiosulfate or its salt, sulfinic acid or its salt, an organic acid and an inorganic salt. Specifically, sodium formaldehyde sulfoxylate dihydrate and 2-hydroxy-2-sulfinate acetic acid disodium may be mentioned.

Specific examples of the pH adjusting agent include an inorganic salt and ammonia. Specific examples of the inorganic salt include phosphates such as disodium hydrogenphosphate and sodium dihydrogen phosphate, sodium hydrogen carbonate, and carbonates such as sodium carbonate. More preferred specific examples of the phosphate include disodium hydrogenphosphate dihydrate and disodium hydrogenphosphate dodecahydrate.

In a case where the first aqueous dispersion contains a chain transfer agent, the content of the chain transfer agent is preferably 0.1 to 5 parts by mass per 100 parts by mass of the aqueous medium. The amount of the chain transfer agent used is preferably 0.1 to 20 parts by mass, more preferably 0.1 to 15 parts by mass, further preferably 0.1 to 10 parts by mass, per 100 parts by mass of the after-described specific monomer used.

In a case where the first aqueous dispersion contains a reducing agent, the content of the reducing agent is preferably 0.01 to 3.0 parts by mass per 100 parts by mass of the aqueous medium.

In a case where the first aqueous dispersion contains a pH adjusting agent, the content of the pH adjusting agent is preferably 0.01 to 3.0 parts by mass per 100 parts by mass of the aqueous medium.

<Specific monomer>

The specific monomer is a monomer containing TFE and PAVE.

The amount of TFE and PAVE used is preferably 80 to 100 mol%, more preferably 90 to 100 mol%, further preferably 95 to 100 mol%, to the amount of the specific monomer used.

The specific monomer may contain a monomer other than TFE and PAVE (hereinafter sometimes referred to as "other monomer").

Specific examples of the other monomer include a monomer having two or more polymerizable unsaturated bonds (hereinafter sometimes referred to as "DV"), a monomer having one or more of at least one type of atom selected from the group consisting of a chlorine atom, a bromine atom and an iodine atom, a monomer having a nitrile group (hereinafter sometimes referred to as "$R_{CN}$"), and units based on the after-described compound (6) (hereinafter sometimes referred to as "POAVE units").

DV is a monomer having two or more polymerizable unsaturated bonds.

Specific examples of the polymerizable unsaturated bond include a carbon atom-carbon atom double bond (C=C) and a carbon atom-carbon atom triple bond (C≡C).

The number of the polymerizable unsaturated bonds in DV is preferably 2 to 6, more preferably 2 or 3, further preferably 2, in view of more excellent polymerizability.

DV preferably further has a fluorine atom, whereby the resulting crosslinked rubber article has a smaller compression set at high temperature.

DV is preferably a monomer represented by the formula (2), whereby the resulting crosslinked rubber article has more excellent mold release property.

$$(CR^{21}R^{22}=CR^{23}-)_{a1}R^{24} \qquad (2)$$

In the formula (2), $R^{21}$, $R^{22}$ and $R^{23}$ are each independently a hydrogen atom, a fluorine atom, a methyl group or a trifluoromethyl group, a1 is an integer of 2 to 6, $R^{24}$ is a $C_{1-10}$ a1-valent perfluorohydrocarbon group, or a group having an etheric oxygen atom at a terminal end or in a carbon-carbon bond of the perfluorohydrocarbon group. The plurality of $R^{21}$, the plurality of $R^{22}$ and the plurality of $R^{23}$ may be respectively identical to each other or different from each other, and they are preferably identical to each other.

a1 is preferably 2 or 3, particularly preferably 2.

$R^{21}$, $R^{22}$ and $R^{23}$ are preferably a fluorine atom or a hydrogen atom, whereby DV is more excellent in polymerizability, it is more preferred that all of $R^{21}$, $R^{22}$ and $R^{23}$ are fluorine atoms or all of them are hydrogen atoms, and it is particularly preferred that all of $R^{21}$, $R^{22}$, $R^{23}$ are fluorine atoms, whereby the resulting crosslinked rubber article is more excellent in mold release property.

$R^{24}$ may be linear, branched or cyclic, preferably linear or branched, particularly preferably linear. The carbon number of $R^{24}$ is preferably 2 to 8, more preferably 3 to 7, further preferably 3 to 6, particularly preferably 3 to 5.

$R^{24}$ may or may not have an etheric oxygen atom, but is preferably have an etheric oxygen atom, whereby more excellent crosslinking property and rubber physical properties are achieved.

The number of the etheric oxygen atom in $R^{24}$ is preferably 1 to 6, more preferably 1 to 3, particularly preferably 1 or 2. The etheric oxygen atom in $R^{24}$ is present preferably at a terminal end of $R^{24}$.

Specific examples of a preferred monomer among the monomers represented by the formula (2) include a monomer represented by the formula (3) and a monomer represented by the formula (4).

$$(CF_2=CF-)_2R^{31} \qquad (3)$$

In the formula (3), $R^{31}$ is a $C_{1-10}$ bivalent perfluorohydrocarbon group or a group having an etheric oxygen atom at a terminal end or in a carbon-carbon bond of the perfluorohydrocarbon group.

$$(CH_2=CH-)_2R^{41} \qquad (4)$$

In the formula (4), $R^{41}$ is a $C_{1-10}$ bivalent perfluorohydrocarbon group, or a group having an etheric oxygen atom at a terminal end or a carbon-carbon bond of the perfluorohydrocarbon group.

Specific examples of the monomer represented by the formula (3) include $CF_2=CFO(CF_2)_2OCF=CF_2$, $CF_2=CFO(CF_2)_3OCF=CF_2$, $CF_2=CFO(CF_2)_4OCF=CF_2$, $CF_2=CFO(CF_2)_6OCF=CF_2$, $CF_2=CFO(CF_2)_8OCF=CF_2$, $CF_2=CFO(CF_2)_2OCF(CF_3)CF_2OCF=CF_2$, $CF_2=CFO(CF_2)_2O(CF(CF_3)CF_2O)_2CF=CF_2$, $CF_2=CFOCF_2O(CF_2CF_2O)_2CF=CF_2$, $CF_2=CFO(CF_2O)_3O(CF(CF_3)CF_2O)_2CF=CF_2$, $CF_2=CFOCF_2CF(CF_3)O(CF_2)_2OCF(CF_3)CF_2OCF=CF_2$,

and $CF_2=CFOCF_2CF_2O(CF_2O)_2CF_2CF_2OCF=CF_2$.

Specific examples of a more preferred monomer among the monomers represented by the formula (3), include $CF_2=CFO(CF_2)_3OCF=CF_2$ (hereinafter sometimes referred to as "C3DVE"), and $CF_2=CFO(CF_2)_4OCF=CF_2$ (hereinafter sometimes referred to as "C4DVE").

Specific examples of the monomer represented by the formula (4) include $CH_2=CH(CF_2)_2CH=CH_2$, $CH_2=CH(CF_2)_4CH=CH_2$ and $CH_2=CH(CF_2)_6CH=CH_2$.

Specific examples of a more preferred monomer among the monomers represented by the formula (4) include $CH_2=CH(CF_2)_6CH=CH_2$ (hereinafter sometimes referred to as "C6DV").

Particularly, DV is preferably C3DVE or C4DVE.

The monomer having at least one type of atom selected from the group consisting of a chlorine atom and an iodine atom may be a monomer having a chlorine atom, a monomer having a bromine atom or a monomer having an iodine atom.

Specific examples of the monomer having a bromine atom include $CF_2=CFOCF_2CF_2CF_2OCF_2CF_2Br$, bromo-trifluoroethylene, 4-bromo-3,3,4,4-tetrafluorobutene-1 (BTFB), vinyl chloride, 1-bromo-2,2-difluoroethylene, perfluoroallylamide, 4-bromo-1,1,2-trifluorobutene-1, 4-bromo-1,1,3,3,4,4-hexafluorobutene, 4-bromo-3-chloro-1,1,3,4,4-pentafluorobutene, 6-bromo-5,5,6,6-tetrafluorohexene, 4-bromoperfluorobutene-1, and 3,3-difluoroallyl bromide. Further, fluorinated compounds such as 2-bromo-perfluoroethylperfluorovinyl ether and $CF_2Br-R_f-O-CF=CF_2$ (wherein $R_f$ is a perfluoroalkylene group), for example, fluorovinyl ethers such as $CF_2BrCF_2O-CF=CF_2$, $ROCF=CFBr$, and $ROCBr=CF_2$ (wherein R is a lower alkyl group or a fluoroalkyl group), specifically, $CH_3OCF=CFBr$ and $CF_3CH_2OCF=CFBr$ may be mentioned.

Specific examples of the monomer having an iodine atom include iodized olefins represented by the formula: CHR=CH-Z-$CH_2$CHR-I (wherein Rs are each independently -H or -$CH_3$; Z is a linear or branched $C_{1-18}$ (per)fluoroalkylene group which may contain one or more etheric oxygen atoms in some cases, or a (per)fluoropolyoxyalkylene group disclosed in US Patent No. 5674959). Unsaturated ethers of the formulae: $I(CH_2CF_2CF_2)_nOCF=CF_2$ and $ICH_2CF_2O[CF(CF_3)CF_2O]_nCF=CF_2$ (in the formulae, n=1 to 3) disclosed in US Patent No. 5717036 may also be mentioned. Further, iodoethylene, 4-iodo-3,3,4,4-tetrafluorobutene-1 (ITFB), 3-chloro-4-iodo-3,4,4-trifluorobutene, 2-iodo-1,1,2,2-tetrafluoro-1-(vinyloxy)ethane, 2-iodo-1-(perfluorovinyloxy)-1,1,-2,2-tetrafluoroethane, 1,1,2,3,3,3-hexafluoro-2-iodo-1-(perfluorovinyloxy)propane, 2-iodoethylvinyl ether, 3,3,4,5,5,5-hexafluoro-4-iodopentene and iodotrifluoroethylene, disclosed in US Patent No. 4694045 may be mentioned. Further, allyl iodide and 2-iodo-perfluoroethylperfluorovinyl ether may be mentioned.

Specific examples of the monomer having a chlorine atom include the above described monomers in which the bromine atom or the iodine atom is replaced with a chlorine atom. Chlorotrifluoroethylene (CTFE), vinyl chloride and vinylidene chloride are typical examples.

$R_{CN}$ preferably has a polymerizable unsaturated bond in view of polymerizability, particularly preferably has one polymerizable unsaturated bond. Specific examples of the polymerizable unsaturated bond include a carbon-carbon atom double bond (C=C) and a carbon atom-carbon atom triple bond (C≡C).

$R_{CN}$ is preferably a monomer represented by the following formula (5) in view of more excellent mold release property and heat resistance.

$$CR^{51}R^{52}=CR^{53}-R^{54}-CN \qquad (5)$$

In the formula (5), $R^{51}$, $R^{52}$ and $R^{53}$ are each independently a hydrogen atom, a fluorine atom or a methyl group, and $R^{54}$ is a bivalent $C_{1-10}$ perfluorohydrocarbon group or a group having an etheric oxygen atom at a terminal end or in a carbon-carbon bond of the perfluorohydrocarbon group.

In view of excellent polymerizability of $R_{CN}$, it is preferred that $R^{51}$, $R^{52}$ and $R^{53}$ are a fluorine atom or a hydrogen atom, it is more preferred that all of $R^{51}$, $R^{52}$ are $R^{53}$ are fluorine atoms or all of them are hydrogen atoms, and it is particularly preferred that all of $R^{51}$, $R^{52}$, $R^{53}$ are fluorine atoms, whereby the resulting crosslinked rubber article is more excellent in mold release property and heat resistance.

$R^{54}$ may be linear, branched or cyclic, and is preferably linear or branched. The carbon number of $R^{54}$ is preferably 2 to 8, more preferably 3 to 7, further preferably 3 to 6, particularly preferably 3 to 5.

$R^{54}$ may or may not contain an etheric oxygen atom, and in view of more excellent rubber physical properties, preferably contains an etheric oxygen atom.

The number of etheric oxygen atom in $R^{54}$ is preferably 1 to 3, particularly preferably 1 or 2.

Specific examples of the monomer represented by the formula (5) include $CF_2=CFOCF_2CF(CF_3)OCF_2CF_2CN$ (hereinafter sometimes referred to as "8CNVE"), $CF_2=CFO(CF_2)_5CN$ (hereinafter sometimes referred to as "MV5CN"), $CF_2=CFOCF_2CF_2CF_2OCF(CF_3)CN$ and $CF_2=CFO(CF_2)_3CN$, and in view of more excellent mold release property and heat resistance, preferred are 8CNVE and MV5CN.

The POAVE units are units based on the compound (6).

$$CF_2=CF(OCF_2CF_2)_n-(OCF_2)_m-OR^{f2} \qquad (6)$$

In the formula, $R^{f2}$ is a $C_{1-4}$ perfluoroalkyl group, n is an integer of 0 to 3, m is an integer of 0 to 4, and n+m is an integer of 1 to 7.

The perfluoroalkyl group as $R^{f2}$ may be linear or branched. The carbon number of $R^{f2}$ is preferably 1 to 3.

When n is 0, m is preferably 3 or 4. When n is 1, m is preferably an integer of 2 to 4. When n is 2 or 3, m is preferably 0. n is preferably an integer of 1 to 3.

When the carbon numbers of $R^{f2}$, n and m are within the above ranges, the resulting crosslinked rubber article formed from the fluorinated elastomer will be more excellent in low temperature properties, and the productivity of the fluorinated elastomer will improve.

Specific examples of the compound (6) are as follows. The description in the bracket after each example is an abbreviated name for the compound.

$$CF_2=CF-OCF_2CF_2-(OCF_2)_4-OCF_3 \text{ (C9PEVE)},$$

$$CF_2=CF-OCF_2CF_2-(OCF_2)_2-OCF_3 \text{ (C7PEVE)},$$

$$CF_2=CF-(OCF_2CF_2)_2-OCF_2CF_3 \text{ (EEAVE)},$$

$$CF_2=CF-(OCF_2CF_2)_3-OCF_2CF_3 \text{ (EEEAVE)},$$

$$CF_2=CF-OCF_2-OCF_3, \quad CF_2=CF-OCF_2-OCF_2-OCF_3$$

As the compound (6), preferred are C9PEVE, C7PEVE, EEAVE and EEEAVE, whereby the resulting crosslinked rubber article formed from the fluorinated elastomer will be more excellent in low temperature properties, and the productivity of the fluorinated elastomer will improve.

Such compounds can be produced from the corresponding alcohols as the materials by the method in accordance with WO00/56694.

The amount of the other monomer used is preferably 0 to 90 mol%, more preferably 0 to 80 mol%, further preferably 0 to 70 mol% to the amount of the specific monomer used.

The specific monomer preferably consists solely of TFE and PAVE, or comprises TFE and PAVE and contains at least one monomer selected from the group consisting of a monomer having two or more polymerizable unsaturated bonds, a monomer having one or more of at least one type of atom selected from the group consisting of a chlorine atom, a bromine atom and an iodine atom, and a monomer having a nitrile group.

The amount of the specific monomer used is preferably 1 to 80 parts by mass, more preferably 1 to 70 parts by mass, further preferably 1 to 65 parts by mass, per 100 parts by mass of the aqueous medium used, contained in the first aqueous dispersion.

<Polymerization initiator>

In the present production method, the specific monomer is polymerized preferably in the presence of a polymerization initiator.

The polymerization initiator is preferably an oil-soluble radical initiator, a water-soluble radical initiator or a water-soluble redox catalyst.

Specific examples of the oil-soluble radical initiator include an oil-soluble organic peroxide such as tert-butyl peroxypivalate (hereinafter sometimes referred to as "PBPV") and diisopropyl peroxydicarbonate (hereinafter sometimes referred to as "IPP").

Specific examples of the water-soluble radical initiator include persulfates such as ammonium persulfate and potassium persulfate, and water-soluble organic peroxides such as disuccinic peroxide, bisglutaric peroxide and tert-butyl hydroperoxide (hereinafter sometimes referred to as "TBHP").

The water-soluble redox catalyst is preferably a combination of an oxidizing agent such as bromic acid or its salt, chloric acid or its salt, persulfuric acid or its salt, permanganic acid or its salt, or hydrogen peroxide, with a reducing agent such as sulfurous acid or its salt, hydrogensulfite or its salt, thiosulfuric acid or its salt, an organic acid or an inorganic salt. The persulfate is preferably potassium persulfate or ammonium persulfate. The sulfite is preferably sodium sulfite. The inorganic salt may be a combination of a sulfate anion, a sulfite anion or a chloride anion with a metal ion. The metal ion is preferably a transition metal ion, and may be a manganese, iron, cobalt, nickel, copper, zinc, cerium or silver ion, preferably an iron ion. The inorganic salt is preferably iron(II) sulfate.

The polymerization initiator is preferably the oil-soluble radical initiator or the water-soluble radical initiator, and with a view to efficiently producing the fluorinated polymer, more preferably the oil-soluble radical initiator, further preferably the oil-soluble organic peroxide.

The polymerization initiator may be used in combination of two or more.

The amount of the polymerization initiator used is preferably 0.01 to 5 parts by mass, more preferably 0.01 to 3 parts by mass, further preferably 0.01 to 2 parts by mass per 100 parts by mass of the specific monomer used.

<Steps>

In the present production method, the specific monomer is polymerized in the first aqueous dispersion to produce the second fluorinated polymer.

The second fluorinated polymer obtained by the present production method has units based on the specific monomer (hereinafter sometimes referred to as "specific units")

In the second fluorinated copolymer, the content of the PAVE units to the total content of the TFE units and the PAVE units is 20 to 95 mol%, preferably 20 to 60 mol%, and in view of more efficient production of the second fluorinated polymer, more preferably 25 to 60 mol%, further preferably 30 to 55 mol%.

In the second fluorinated polymer, the total content of the TFE units and the PAVE units is preferably 80 to 100 mol%, more preferably 90 to 100 mol%, further preferably 95 to 100 mol% to all unit in the second fluorinated polymer.

The specific monomer is put into a reaction system (that is a polymerization reactor) by a conventional method. For example, the specific monomer may be put into the reaction system continuously or intermittently so as to keep a predetermined polymerization pressure. Otherwise, the specific monomer may be dissolved in the aqueous medium and the obtained solution is continuously or intermittently put into the reaction system.

In a case where the polymerization initiator is used, the polymerization initiator may be added to the reaction system all at once or in divided portions.

The polymerization temperature is preferably 10 to 95°C, more preferably 15 to 90°C.

The polymerization pressure is preferably 0.5 to 4.0 MPaG, more preferably 0.6 to 3.5 MPaG.

The polymerization time is preferably 90 to 1000 minutes, more preferably 90 to 700 minutes in the case of batch treatment.

The polymerization of the specific monomer is conducted preferably substantially in the absence of an emulsifier.

The emulsifier may be the above-described emulsifier.

"Substantially in the absence of an emulsifier" means an environment in which the content of the emulsifier is 0.03 mass ppm or less to the total mass of an aqueous medium contained in the aqueous dispersion, and the content is preferably 0.02 mass ppm or less, more preferably 0 mass ppm.

In the present production method, particles containing the second fluorinated polymer are formed. Specifically, according to the present production method, a second aqueous dispersion having the particles containing the second fluorinated polymer dispersed in the aqueous medium is obtained.

The particles containing the second fluorinated particles may contain the first fluorinated polymer or may not contain the first fluorinated copolymer.

[Second aqueous dispersion]

The second aqueous dispersion is an aqueous dispersion obtained by the present production method.

Specifically, the second aqueous dispersion is an aqueous dispersion containing the aqueous medium and the particles containing a fluorinated polymer (hereinafter sometimes referred to as "specific particles"), wherein

particles have an average particle size of 1 μm or less,
the particles have units based on tetrafluoroethylene and units based on a perfluoro(alkyl vinyl ether),
the fluorinated polymer has at least one of a chlorine atom, a bromine atom, an iodine atom and a nitrile group in at least one of terminal ends and side chains, and
the total content of an emulsifier is 100 mass ppm or less to the total mass of the aqueous dispersion.

<Specific particles>

The second aqueous dispersion is readily obtained by the present production method. Thus, the specific particles contained in the second aqueous dispersion are preferably particles containing the second fluorinated polymer.

In a case where the specific particles contain the second fluorinated polymer, the specific particles may contain the first fluorinated polymer or may not contain the first fluorinated polymer.

The second aqueous dispersion may further contain, in addition to the specific particles, particles of the first fluorinated polymer.

The specific particles have TFE units and PAVE units.

The details of the TFE units are the same as those of the TFE units in the first fluorinated polymer, and preferred embodiments are also the same.

The details of the PAVE units are the same as those of the PAVE units in the first fluorinated polymer, and preferred embodiments are also the same.

Further, the contents of the TFE units and the PAVE units to all units in the fluorinated polymer are also the same as the contents of the respective units in the second fluorinated polymer, and preferred embodiments are also the same.

In this specification, in a case where the specific particles contain only one type of the fluorinated polymer, "all units in the fluorinated polymer" means all units in the one type of the fluorinated polymer. In a case where the specific particles contain two or more types of the fluorinated polymer, "all units in the fluorinated polymer" means all units in the two or more types of the fluorinated polymer.

The specific particles may have units based on other monomer, other than the specific units. For example, other monomer in the second fluorinated polymer may be mentioned.

The fluorinated polymer contained in the specific particles has at least one of a chlorine atom, a bromine atom, an iodine atom and a nitrile group in at least one of the terminal ends and side chains of the fluorinated polymer.

By using the above other monomer at the time of production of the fluorinated polymer contained in the specific particles, it is possible to introduce a chlorine atom, a bromine atom, an iodine atom or a nitrile group.

In a case where the fluorinated polymer contained in the specific particles has an iodine atom, it is also preferred that the fluorinated polymer is obtained by polymerization of the compound represented by the formula (I). In a case where the compound represented by the formula (I) (a chain transfer agent containing an iodine atom) is used, it is possible to introduce an iodine atom at the terminal end of the fluorinated polymer (polymer chain).

$$(R^f)\text{-}(X)_2 \qquad (I)$$

In the formula (I),

$R^f$ is a $C_{1\text{-}16}$ fluoroalkylene group, or an aromatic group,
X is an iodine atom or a bromine atom, and at least one X is an iodine atom.

The fluoroalkylene group as $R^f$ may be linear or branched. $R^f$ is preferably a perfluoroalkylene group.

It is preferred that all X are iodine atoms.

The compound represented by the formula (I) may, for example, be 1,2-diiodoperfluoroethane, 1,3-diiodoperfluoropropane, 1,4-diiodoperfluorobutane(hereinafter sometimes referred to as "C4DI"), 1,5-diiodoperfluoropentane, 1,6-diiodoperfluorohexane, 1,8-diiodoperfluorooctane, 1,3-diiodo-2-chloroperfluoropropane, 1,5-diiodo-2,4-dichloroperfluoropentane, 1,12-diiodoperfluorododecane, 1,16-diiodoperfluorohexadecane, diiodomethane, 1,2-diiodoethane, 1,3-diiodo-n-propane, (2-iodoethyl) substituted benzene, 1-iodo-4-bromoperfluorobutane, 1-iodo-6-bromoperfluorohexane, 1-iodo-8-bromoperfluorooctane, 1-bromo-2-iodoperfluoroethane, 1-bromo-3-iodoperfluoropropane, 2-bromo-3-iodoperfluorobutane, 3-bromo-4-iodoperfluorobutene-1, 2-bromo-4-iodoperfluorobutene-1, monoiodo-monobromo-substituted benzene or diiodo-monobromo-substituted benzene.

The compound represented by the formula (I) is preferably C4DI.

In a case where the fluorinated polymer contained in the specific particles contains an iodine atom, the proportion of the iodine atom is preferably 0.01 to 5.00 mass%, more preferably 0.01 to 2.00 mass%, further preferably 0.01 to 1.00 mass% to the total mass of the fluorinated polymer.

The content of the specific particles is, to the total mass of the aqueous dispersion, in view of dispersion stability of the specific particles, preferably 1 to 50 mass%, more preferably 1 to 40 mass%, further preferably 1 to 30 mass%.

The average particle size of the specific particles is 1 $\mu$m or less, and in view of dispersion stability of the specific particles, preferably 500 nm or less, more preferably 400 nm or less.

The average particle size of the specific particles is, in view of agglomeration property, preferably 50 nm or more, more preferably 70 nm or more, further preferably 100 nm or more.

The average particle size of the specific particles is a particle size at a point where the cumulative volume is 50% on a cumulative curve obtained by measuring the particle size distribution by laser diffraction/scattering method and taking the whole volume of the groups of the particles as 100%.

<Aqueous medium>

Specific examples of the aqueous medium contained in the second aqueous dispersion are the same as the specific examples of the aqueous medium used for production of the first fluorinated polymer.

The content of the aqueous medium is, to the total mass of the aqueous dispersion, in view of dispersion stability of the specific particles, preferably 50 to 99 mass%, more preferably 60 to 99 mass%, further preferably 70 to 99 mass%.

<Emulsifier>

In the second aqueous dispersion, the content of the emulsifier is 100 mass ppm or less, preferably 75 mass ppm or less, more preferably 50 mass ppm or less, further preferably 1 mass ppm or less, to the total mass of the second aqueous dispersion. Further, it is also preferably the quantitative determination limit or less of the measurement method in Examples. The lower limit may be 1 mass ppb.

The content of the emulsifier may be measured by the method of measuring the content of the emulsifier in the above-described method for producing the fluorinated elastomer.

Specific examples of the emulsifier are as described above. The emulsifier in the second aqueous dispersion may be water-soluble or may not be water-soluble.

<Application>

The second aqueous dispersion does not require the emulsifier, as described above, and thus it can easily be converted to a dispersion of an organic solvent such as N-methylpyrrolidone or acetone by solvent replacement.

For example, the second aqueous dispersion is mixed with an organic solvent and dehydrated by evaporation or over anhydrous sodium sulfate to obtain a dispersion of the organic solvent.

In the second aqueous dispersion, the fluorinated polymer can stably be dispersed, even though no emulsifier is contained. Thus, the second aqueous dispersion can suitably be applied to coatings, binders, etc.

Further, by agglomerating the specific particles from the second aqueous dispersion, solids of the specific particles can be obtained. The solids of the specific particles obtained by agglomeration may be properly molded by a known method. The molding method may, for example, be injection molding, extrusion, co-extrusion, blow molding, compression molding, inflation molding, transfer molding or calendering.

The agglomeration method may be freeze agglomeration, acid agglomeration, basic agglomeration, mechanical agglomeration or agglomeration by a coagulant, but is not limited thereto.

In the case of freeze agglomeration, the agglomeration temperature is preferably -20 to 0°C. The agglomeration time is preferably 1 hour or more, more preferably 2 hours or more.

In the case of acid agglomeration, preferred is a method of adding a solution containing an acid to the second aqueous dispersion. The acid added may, for example, be hydrochloric acid, nitric acid, sulfuric acid, oxalic acid or hydrofluoric acid, and is preferably nitric acid. The concentration of the acid in the solution containing the acid is preferably 0.1 to 50 mass%, more preferably 1 to 30 mass%, further preferably 1 to 10 mass%.

In the case of basic agglomeration, preferred is a method of adding a solution containing a base to the second aqueous dispersion. The base added may, for example, be sodium hydroxide, potassium hydroxide or ammonium carbonate, and is preferably sodium hydroxide. The concentration of the base in the solution containing the base is preferably 0.1 to 50 mass%, more preferably 1 to 30 mass%, further preferably 1 to 10 mass%.

In the case of agglomeration by a coagulant, a known coagulant may be used. The known coagulant may be an aluminum salt, a calcium salt or a magnesium salt. Specifically, aluminum sulfate, alum represented by the formula $M'Al(SO_4)_2 \cdot 12H_2O$ wherein M' is a monovalent cation other than lithium, calcium nitrate and magnesium sulfate may be mentioned, alum is preferred, and potassium alum wherein M is potassium is more preferred.

The agglomeration method is preferably basic agglomeration, whereby agglomeration is particularly likely to proceed.

The second aqueous dispersion containing the second fluorinated polymer may be used for co-agglomeration with an aqueous dispersion containing a different fluorinated polymer as it is or after its concentration is adjusted. The co-agglomeration may be conducted by a known method, such as a method of dropping a mixture having the aqueous dispersions mixed to a coagulation medium or a method of dropping a coagulation medium to a mixture of the aqueous dispersions. Specific co-agglomeration method includes freeze agglomeration, acid agglomeration, basic agglomeration, mechanical agglomeration and agglomeration by a coagulant, but the co-agglomeration method is not limited thereto.

The different fluorinated polymer may be a fluorinated elastomer or a fluororesin. The fluorinated elastomer may, for example, be a polymer using hexafluoropropene (hereinafter sometimes referred to as "HFP") and vinylidene fluoride (hereinafter sometimes referred to as "VdF"), that is a HFP/VdF based elastomer, a polymer using TFE, HFP and VdF, that is a TFE/HFP/VdF based elastomer, a polymer using TFE and propylene, that is a TFE/propylene based elastomer, or a polymer using TFE, HFP and PAVE, that is a TFE/HFP/PAVE based elastomer, but is not limited thereto. The fluororesin may be a polymer containing VdF or TFE. The polymer containing TFE may be a TFE homopolymer or a fluorinated copolymer of TFE and an olefin other than TFE. Specific examples include a TFE/ethylene based copolymer, a TFE/HFP based copolymer and a TFE/PAVE based copolymer, but the polymer is not limited thereto. The aqueous dispersion of the different fluorinated polymer may or may not contain an emulsifier.

The composition obtained by co-agglomeration may be washed and dried as the case requires and used as a base material for molding, and it can provide a molded product having excellent heat resistance, mechanical strength, abrasion resistance, transparency, molding processability, etc.

[Solid composition]

The solid composition of the present invention is a solid composition comprising a fluorinated polymer,

which contains units based on tetrafluoroethylene and units based on a perfluoro(alkyl vinyl ether), and
which contains substantially no emulsifier.

"The solid composition containing substantially no emulsifier" means that in the solid composition of the present invention, the content of a water-soluble emulsifier is 500 mass ppb or less to the total mass of the solid composition, and the content is preferably 300 mass ppb or less, more preferably 250 mass ppb or less. Further, it is also preferably the quantitative determination limit or less of the measurement method in Examples. The lower limit may be 1 mass ppb.

Specific examples of the emulsifier are as described above.

In this specification, the solid composition means a composition having a solid content mass of 99 mass% or more.

The solid content mass is calculated based on the mass before and after heating by the following method.

2.0 g of the solid composition is heated at 170°C for 20 minutes and the mass of the residue is weighed, and the solid content mass is calculated in accordance with the following formula.

$$\text{Solid content mass (mass\%)} = 100 \times (\text{mass of residue})/(\text{mass of solid composition})$$

The solid composition is obtained preferably by the above-described agglomeration method using the second aqueous dispersion. Preferred embodiments of the fluorinated polymer contained in the solid composition are the same as the preferred embodiments of the fluorinated polymer in the specific particles contained in the second aqueous dispersion,

That is, the fluorinated polymer contained in the solid composition is preferably the above-described second fluorinated polymer. The second fluorinated polymer may contain the first fluorinated polymer.

The content of the fluorinated polymer is preferably 99.0 to 100 mass%, more preferably 99.5 to 100 mass%, further preferably 99.8 to 100 mass% to the total mass of the solid composition.

In the solid composition, the total content of the emulsifier is 500 mass ppb or less, preferably 300 mass ppb or less, more preferably 250 mass ppb or less to the total mass of the fluorinated polymer. It is also preferably the quantitative determination limit or less of the measurement method in Examples. The lower limit may be more than 0 mass ppb.

The number of the type of the emulsifier contained in the solid composition is the number of the type of the emulsifier the content of which is more than the quantitative determination limit, and the emulsifier the content of which is the quantitative determination limit or less is not counted. Specifically, in measurement of the contents of emulsifier X, emulsifier Y and emulsifier Z in the solid composition, in a case where the contents of the emulsifier X and the emulsifier Y are more than the quantitative determination limit and the content of the emulsifier Z is the quantitative determination limit or less, the solid composition is considered to contain two types of the emulsifier X and the emulsifier Y.

In order to obtain the solid composition containing substantially no emulsifier, a method of using no hydrocarbon-containing surfactant, no fluorinated emulsifier and no polymer emulsifier at the time of polymerization for the fluorinated polymer, that is at the time of polymerization for the first fluorinated polymer and the second fluorinated polymer may be mentioned.

The content of the emulsifier may be measured by the method of measuring the content of the emulsifier in the above-described method for producing the fluorinated elastomer.

<Physical properties>

By the solid composition containing substantially no emulsifier and having a storage elastic modulus G' within a specific range, excellent processability is achieved. The processability is evaluated by roll winding property and roll surface temperature. The better the roll winding property is, the better the adhesion between a metal roll surface and the solid composition will be and the easier the molding processing will be. The higher the roll surface temperature is, the less the heating process required for the molding processing will be necessary. Since the emulsifier inhibits adhesion between the roll metal surface and the solid composition, the less the amount of the emulsifier contained is, the better the roll winding property will be. The storage elastic modulus G' affects the roll winding property and the roll surface temperature.

The storage elastic modulus G' of the solid composition is preferably 200 to 1200 kPa. If it is lower than this range, the roll surface temperature tends to decrease, and if it is higher than this range, the roll winding property tends to decrease, and the processability tends to deteriorate.

The storage elastic modulus G' of the solid composition is preferably 400 kPa or more and preferably 1100 Kpa or less, more preferably 500 to 1100 KPa, particularly preferably 500 to 1100 KPa in view of excellent processability.

As an example of a method for producing the solid composition comprising the fluorinated polymer that has a storage elastic modulus G' of 200 to 1200 kPa and is obtained without using an emulsifier, a method of adjusting the order of addition of the respective monomers, the addition times, etc., at the time of production of the fluorinated copolymer, may be mentioned.

The storage elastic modulus G' of the solid composition of the present invention is a value measured in accordance with ASTM D6204, and measurement conditions in detail are as described in Examples.

Measurement conditions for the roll winding property and the roll surface temperature of the solid composition of the present invention and processability evaluation methods are as described in Examples in detail.

EXAMPLES

Now, the present invention will be described in further detail with reference to Examples. Ex. 1 to 5 are Examples of the present invention, and Ex. 6 and 7 are Comparative Examples. However, it should be understood that the present invention is by no means restricted thereto.

[Measurement and evaluation methods]

The measurement methods and evaluation methods are as follows.

<Average particle size of particles in second aqueous dispersion>

Using the second aqueous dispersion in each Ex. described later, as a sample, measured by means of a laser diffraction/scattering particle size distribution measuring apparatus (ELSZ manufactured by Otsuka Electronics Co., Ltd.).

The average particle size of the particles in the first aqueous dispersion, measured in the same manner as for the second aqueous dispersion, was the same as the average particle size of the particles in the second aqueous dispersion.

<Proportion of units in polymer>

The proportion of each units in the polymer was obtained by $^{19}$F-NMR analysis and infrared absorption spectrum.

<Content of emulsifier >

(Preparation of measurement sample)

The solid content obtained in each Ex. described later was freeze-ground by a freeze-grinding machine Freezer Mill 6775 (manufactured by SPEX) under the following conditions. When freeze-ground, the solid content was preliminarily mixed with dibutylhydroxytoluene (BHT) in an amount corresponding to 10 mass% of the total mass of the solid content to obtain a ground powder. The freeze-grinding conditions were such that the solid content: 3 g, BHT: 0.3 g, Run time: 5 mins, Rate: 15 cps, and Cycle: 3.

5 mL of methanol was added to 2.5 g of the obtained ground powder, and the mixture was subjected to ultrasonic treatment at 50°C for 2 hours and then subjected to centrifugal separation (5000 rpm, 5 minutes) to settle the fluorinated polymer, and the resulting supernatant was taken as an extract.

With respect to the content of the compound represented by the formula (S1) contained in each extract, the contents of the compounds of the formula (S1) wherein n=3 to 13, 15 and 17 were obtained by calculation to a corresponding perfluorocarboxylic acid with the same carbon number. With respect to the content of the compound represented by the formula (S3) in the obtained aqueous phase, the contents of the compounds of the formula (S3) wherein n=4 to 10 and 12 were obtained by calculation to a corresponding perfluorosulfonic acid with the same carbon number.

Specifically, first, methanol standard solutions of a perfluorocarboxylic acid, a perfluorosulfonic acid and the surfactant A, each having a known concentration of 1 to 180 ng/g, were prepared, each at 5 concentrations. From the respective sample concentrations and the integrated peak areas, by first-order approximation, a and a' were obtained from the formula (A1), the formula (A1') and the formula (A").

$$A = a \times X \qquad (A1)$$

A: peak area of perfluorocarboxylic acid, X: concentration (ng/g) of perfluorocarboxylic acid

$$A' = a' \times X' \qquad (A1')$$

A': peak area of perfluorosulfonic acid, X': concentration of (ng/g) perfluorosulfonic acid

$$A'' = a'' \times X'' \qquad (A1'')$$

A": peak area of surfactant A, X": concentration of (ng/g) surfactant A

Measurement apparatus and measurement conditions are shown in the following Table 1.

Table 1

| LC unit | | |
|---|---|---|
| Apparatus | CTO-40C manufactured by Shimadzu Corporation | |
| Column | Shim-pack Velox SP-C18 2.7 $\mu$m, 150 mm $\times$ 2.1 mm | |
| Mobile phase | A 20mM $CH_3COONH_4/H_2O$ | |
| | B $CH_3OH$ | |
| | 0→0.5 min | A:B=80:20→A:B=75:25 Linear gradient |
| | 0.5→3.5 min | A:B=75:25-A:B=70:30 Linear gradient |
| | 3.5→5.0 min | A:B=70:30→A:B=40:60 Linear gradient |
| | 5.0→9.5 min | A:B=40:60→A:B=20:80 Linear gradient |
| | 9.5→10.0 min | A:B=20:80→A:B=2:98 Linear gradient |
| | 10.0→20.0 min | A:B=2:98 |
| | 20.0→20.1 min | A:B=2.0:98.0→A:B=80:20 Linear gradient |
| | 20.1→25.0 min | A:B=80:20 |
| Flow rate | 0.25mL/min | |
| Column temperature | 40°C | |
| Sample injection amount | 2 $\mu$L | |
| MS unit | | |
| Apparatus | LCMS-8060NX manufactured by Shimadzu Corporation | |
| Measurement mode | MRM (Multiple Reaction Monitoring) | |
| | ESI (Electrospray ionization) | |
| Ionization method | Negative mode | |

MRM measurement parameters are shown in Tables 2, 3 and 4.

Table 2

| Compound | Carbon number | n= | Precursor | Product |
|---|---|---|---|---|
| Perfluorobutanoic acid | 4 | 3 | 213 | 169 |
| Perfluoropentenoic acid | 5 | 4 | 263 | 219 |
| Perfluorohexanoic acid | 6 | 5 | 313 | 269 |
| Perfluoroheptanoic acid | 7 | 6 | 363 | 319 |
| Perfluorooctanoic acid | 8 | 7 | 413 | 369 |
| Perfluorononanoic acid | 9 | 8 | 463 | 419 |
| Perfluorodecanoic acid | 10 | 9 | 513 | 469 |
| Perfluoroundecanoic acid | 11 | 10 | 563 | 519 |

(continued)

| Compound | Carbon number | n= | Precursor | Product |
|---|---|---|---|---|
| Perfluorododecanoic acid | 12 | 11 | 613 | 569 |
| Perfluorotridecanoic acid | 13 | 12 | 663 | 619 |
| Perfluorotetradecanoic acid | 14 | 13 | 713 | 669 |
| Perfluorohexadecanoic acid | 16 | 15 | 813 | 769 |
| Perfluorooctadecanoic acid | 18 | 17 | 913 | 869 |

Table 3

| Compound | Carbon number | n= | Precursor | Product |
|---|---|---|---|---|
| Perfluorobutanesufononic acid | 4 | 4 | 299 | 99 |
| Perfluoropentanesulfonic acid | 5 | 5 | 349 | 99 |
| Perfluorohexanesulfonic acid | 6 | 6 | 399 | 99 |
| Perfluoropentanesulfonic acid | 7 | 7 | 449 | 99 |
| Perfluorooctanesulfonic acid | 8 | 8 | 499 | 99 |
| Perfluorononanesulfonic acid | 9 | 9 | 549 | 99 |
| Perfluorodecanesulfonic acid | 10 | 10 | 599 | 99 |
| Perfluorododecanesulfonic acid | 12 | 12 | 699 | 99 |

Table 4

| Compound | Precursor | Product |
|---|---|---|
| Surfactant A | 251 | 135 |

Specifically, first, by the above liquid chromatography mass spectroscope, the compound represented by either the formula (S1) or the formula (S3) and the surfactant A contained in each extract were measured. Peak areas of the compounds represented by the formula (S1) and the formula (S3) with the respective carbon numbers and the surfactant A were obtained by MRM method.

The contents of the compound represented by the formula (S1), the compound represented by the formula (S3) and the surfactant A were calculated respectively from the formula (A2), the formula (A2') and the formula (A2"). a in the formula (A2) represents a obtained from the formula (A1), a' in the formula (A2') represents a' obtained from the formula (A1'), and a" in the formula (A") represents a" obtained from the formula (A").

$$XCm = ACm/a \quad (A2)$$

XCm: content (ng/g) of the compound represented by the formula (S1) with a carbon number (n+1) in each extract
ACm: peak area of the compound represented by the formula (S1) with a carbon number (n+1) in each extract

$$XCm' = ACm'/a' \quad (A2')$$

XCm': content (ng/g) of the compound represented by the formula (S3) with a carbon number n in each extract
ACm': peak area of the compound represented by the formula (S3) with a carbon number n in each extract

The quantitative determination limit in this measurement is 1 ng/g.

$$XCm'' = ACm''/a'' \quad (A2'')$$

XCm": content (ng/g) of the surfactant A in each extract

ACm": peak area of the surfactant A in each extract

The quantitative determination limit in this measurement is 1 ng/g.

The content (ZCm) of the compound of the formula (S1) to the total mass of the solid content was obtained from the following formula (A3).

$$ZCm = XCm \times \rho1 \times La/W1 \quad (A3)$$

ZCm: content of the compound represented by the formula (S1) with a carbon number (n+1) contained in the solid content
$\rho1$: density of extraction solvent (methanol in each Ex.)
La: volume of extraction solvent (5 mL in each Ex.)
W1: mass of sample used for extraction (2.5 g of solid content in each Ex.)

The content (ZCm') of the compound of the formula (S3) to the total mass of the solid content was obtained from the following formula (A4).

$$ZCm' = XCm' \times \rho1 \times La/W1 \quad (A4)$$

ZCm': content of the compound represented by the formula (S3) with a carbon number n contained in the solid content
$\rho1$: density of extraction solvent (methanol in each Ex.)
La: volume of extraction solvent (5 mL in each Ex.)
W1: mass of sample used for extraction (2.5 g of solid content in each Ex.)

The content (ZCm") of the surfactant A to the total mass of the solid content was obtained from the following formula (A5).

$$ZCm'' = XCm'' \times \rho1 \times La/W1 \quad (A5)$$

ZCm": content of the surfactant A contained in the solid content
$\rho1$: density of extraction solvent (methanol in each Ex.)
La: volume of extraction solvent (5 mL in each Ex.)
W1: mass of sample used for extraction (2.5 g of solid content in each Ex.)

<Iodine content measurement method>

The solid composition was heat-pressed into a 100 $\mu$m sheet. The obtained sheet-shaped composition was subjected to fluorescent X-ray analysis by ZSX PrimusII (manufactured by Rigaku Corporation), and by fundamental-parameters method, the iodine content in the solid composition (the total mass of the first fluorinated polymer and the second fluorinated polymer) was calculated.

<Storage elastic modulus G' measurement method>

As a measurement apparatus, a rubber processability analyzing apparatus "PREMIER RPA (manufactured by ALPHA TECHNOLOGIES, die: D0380)" was used.

<Sheet preparation>

The solid composition obtained in each Ex. was kneaded by a two-roll mill at room temperature for 10 minutes to prepare a 3 mm thick sheet. The sheet thickness was adjusted by adjusting the gap between the two rolls.

The obtained sheet was cut so that the weight was about 10 g to obtain a cut sheet. The cut sheet was sandwiched between two polyester films (manufactured by ALPHA TECHNOLOGIES, PART#F0311-S, 130 mm $\times$ 130 mm $\times$ 24 $\mu$m) to obtain a measurement sample. The sample was placed on a die of the measurement apparatus. The die temperature was preliminarily set to 100°C.

The sample was held at 100°C at a frequency of 30 cpm at an angle of amplitude of 0.2 deg for 2 minutes, and then at an angle of amplitude of 0.5 deg, the frequency was increased to 10 cpm, 20 cpm, 50 cpm, 100 cpm, 200 cpm, 500 cpm, 1000 cpm and 2000 cpm, and the storage elastic modulus was measured. The storage elastic modulus at a frequency of 2000 cpm at 100°C was taken as the storage elastic modulus G' (unit: kPa) of the sample.

The sample was held at 100°C at a frequency of 30 cpm at an angle of amplitude of 0.2 deg for 2 minutes, and then at an angle of amplitude of 0.5 deg, the frequency was increased to 10 cpm, 20 cpm, 50 cpm, 100 cpm, 200 cpm, 500 cpm, 1000 cpm and 2000 cpm, and the storage elastic modulus was measured. The storage elastic modulus at a frequency of 2000 cpm at 100°C was taken as the storage elastic modulus G' (unit: kPa) of the sample.

<Roll winding property evaluation method>

The solid composition obtained in each Ex. was kneaded by a roll kneading machine (manufactured by Yamatetsu Machinery Inc., Test Toll Machine) to prepare a sheet, whereby the roll winding property was confirmed.

The roll kneading machine has two rolls (roll diameter: 8 inches, roll length: 18 inches), and two guide members each disposed above the gap between the rolls and in the vicinity of each end portion of the rolls. The guide members keep the width of an object to be processed, spreading in the roll axis direction after passing through the rolls, to be a predetermined width.

200 g of the solid composition at room temperature (23°C) was weighed, and the fluorinated polymer was put between the guide members of the roll kneading machine set to the following conditions. A time from the solid composition was put until the fluorinated polymer (bank) stayed on the roll gap between the guide members had disappeared and the entire fluorinated polymer was wound on the roll ("winding time") was measured.

·roll temperature: 25°C
·roll gap: 2.5 mm
·number of revolutions of front roll: 12 rpm
·number of revolutions of rear roll: 10 rpm
·width between guide members: 150 mm

The roll temperature was adjusted by a water heater (WTC40, manufactured by NAKAMURA KAGAKUKOGYO CO., LTD.).

The roll winding property of the solid composition was evaluated from the measured time based on the following evaluation standards.

(Roll winding property evaluation standards)

O: Roll winding time being within 2 minutes.
△: Roll winding time being more than 2 minutes and 3 minutes or less.
×: Not the entire fluorinated polymer being wound on the roll, or the winding time being more than 3 minutes.

<Roll surface temperature>

With respect to the sheet obtained under the above conditions, the sheet surface temperature of 25°C was confirmed by a contact thermometer (manufactured by HOZAN CO., LTD., tradename "DT-510"), and then the sheet was charged again to the rolls at a roll temperature of 25°C. During the test, the water heater was off. The other conditions were the same as the conditions in the roll winding property test. 5 Minutes after charging, the wound sheet was removed immediately, and the surface temperature of the roll was measured by the above contact thermometer, which was taken as the roll surface temperature.

(Roll surface temperature evaluation standards)

A: 45°C or higher
B: 35 to 45°C
C: less than 35°C

(Processability)

Roll winding property evaluation, roll surface temperature evaluation A: 3 points
Roll winding property evaluation, roll surface temperature evaluation B: 2 points
Roll winding property evaluation, roll surface temperature evaluation C: 1 point

◎: Total scores of roll winding property evaluation and roll surface temperature evaluation being 6 points
O: Total scores of roll winding property evaluation and roll surface temperature evaluation being 5 points
△: Total scores of roll winding property evaluation and roll surface temperature evaluation being 4 points
✕: Total scores of roll winding property evaluation and roll surface temperature evaluation being 2 points, 3 points

[Production of stock solution A]

Into a stainless steel pressure resistant reactor having an internal capacity of 2.2 L, equipped with an anchor blade, ultrapure water (1130 g), a 30% aqueous ammonia solution (30 mg), PMVE (72 g) and TFE (14 g) were charged and heated to 90°C with stirring at 600 rpm. An aqueous ammonium persulfate solution (5.0 mass%, 30 cc) was added to initiate the polymerization. Since the pressure in the reactor decreased as the polymerization started, TFE was added to keep a constant pressure. Upon injection of 4 g of TFE, the reactor was cooled to terminate the polymerization reaction. The gas remaining in the reactor was recovered, and the liquid was withdrawn. This liquid was taken as stock solution A.
The stock solution A was freeze-agglomerated and subjected to filtration, and the obtained fluorinated polymer 1A was analyzed by NMR and as a result, PMVE units/TFE units=34/66 (molar ratio).

[Production of stock solution B]

HPR4002CI (manufactured by DuPont, anion exchange resin, 200 g) was added to the stock solution A. 150 Minutes after start of stirring, the stock solution was separated from the ion exchange resin by filtration. To the filtrate, AmberLite (registered trademark) HPR650H (manufactured by DuPont, cation exchange resin, 50 g) was added. 60 Minutes after start of stirring, the stock solution was separated from the ion exchange resin by filtration to obtain stock solution B. The stock solution B had particles of the fluorinated polymer 1A dispersed in the aqueous medium, and the content of the fluorinated polymer 1A was 0.6 mass% to the total mass of the stock solution B.

[Ex. 1]

Into a stainless steel pressure resistant reactor having an internal capacity of 2.2 L, equipped with an anchor blade, the stock solution B (1000 g) and ultrapure water (175 g) were charged to obtain aqueous dispersion B (first aqueous dispersion). PMVE (72 g) and TFE (14 g) were charged thereto, and the mixture was heated to 80°C with stirring at 600 rpm. TFE and PMVE were injected until the pressure in the reactor reached 1.2 MPa [gauge], and aqueous ammonium persulfate solution (2.5 mass%, 7 ml) was added to initiate polymerization. Since the pressure in the reactor decreased as the polymerization started, TFE and PMVE were alternately added to keep a constant pressure. Upon injection of 80 g of TFE and 63 g of PMVE, the reactor was cooled to terminate the polymerization reaction. The polymerization time was 138 minutes.
In the aqueous dispersion B, the content of the fluorinated polymer 1A was 0.5 mass% to the total mass of the aqueous dispersion B.
The amount of the monomer used for the polymerization was 12.2 parts by mass based on the amount of the aqueous medium in the aqueous dispersion B used for the polymerization being 100 parts by mass.
The aqueous dispersion B contained substantially no water-soluble emulsifier. Specifically, the contents of the surfactant A ($C_2F_5OCF_2CF_2OCF_2COONH_4$) and compounds represented by the formulae (S1) to (S4) were measured by the following method. In production of the aqueous dispersion B, an emulsifier other than the surfactant A and the compounds represented by the formulae (S1) to (S4) was not formed from the components used for production of the aqueous dispersion B nor used, and thus not contained in aqueous dispersion B.
The mass of the solid content of the aqueous dispersion B was measured, and the aqueous dispersion B in an amount corresponding to 0.05 g of the solid content was weighed in a 100 mL screw bottle. Then, water and methanol were added so as to achieve a ratio of 40 g of water/methanol=50/50 vol% in the weighed aqueous dispersion B. Then, the mixture was well shaken until agglomeration. The solid content was removed, the liquid phase was subjected to centrifugal separation at 4000 rpm for 1 hour, and the supernatant was extracted. Except for the sample preparation method, the contents of the compounds represented by the formulae (S1) to (S4) were measured in the same manner as the method of measurement of the content of the emulsifier and as a result found to be the quantitative determination limit or less to the aqueous dispersion B.

The gas remaining in the reactor was recovered, and the liquid was withdrawn. The liquid was taken as aqueous dispersion 1 (second aqueous dispersion). The aqueous dispersion 1 is a dispersion having particles (average particle size: 144.1 nm) containing the fluorinated polymer 2A dispersed in the aqueous medium and had a solid content concentration of 11.5 mass%.

The content of the emulsifier in the aqueous dispersion 1 was 100 mass ppm or less. Specifically, the contents of the surfactant A and the compounds represented by the formulae (S1) to (S4) were measured in the same manner as for the aqueous dispersion B. In production of the aqueous dispersion 1, an emulsifier other than the surfactant A and the compounds represented by the formulae (S1) to (S4) was not formed from the components used for production of the aqueous dispersion 1 nor used and thus not contained in the aqueous dispersion 1.

An aqueous aluminum sulfate solution was added to the aqueous dispersion 1 to conduct agglomeration. The obtained agglomerate was washed with water and dried to obtain solid composition 1 containing a rubber-like fluorinated copolymer.

The obtained solid composition 1 was analyzed by NMR and as a result, PMVE units/TFE units=66/34 (molar ratio).

[Stock solution C]

Into a stainless steel pressure resistant reactor having an internal capacity of 2.2 L, equipped with an anchor blade, ultrapure water (180 g), PMVE (72 g) and TFE (14 g) were charged and heated to 90°C with stirring at 600 rpm. An aqueous ammonium persulfate solution (5.0 mass%, 30 cc) was added to initiate the polymerization. Since the pressure in the reactor decreased as the polymerization started, TFE was added to keep a constant pressure. Upon injection of 4 g of TFE, the reactor was cooled to terminate the polymerization reaction. The gas remaining in the reactor was recovered, and the liquid was withdrawn. This liquid was taken as stock solution C.

The stock solution C was freeze-agglomerated and subjected to filtration, and the obtained fluorinated polymer 1C was analyzed by NMR and as a result, PMVE units/TFE units=30/70 (molar ratio).

[Stock solution D]

Stock solution D was produced in the same manner as for production of the stock solution B except that the stock solution C was used instead of the stock solution A.

[Ex. 2]

Into a stainless steel pressure resistant reactor having an internal capacity of 2.2 L, equipped with an anchor blade, the stock solution D (1000 g) and ultrapure water (175 g) were charged to obtain aqueous dispersion D (first aqueous dispersion). PMVE (43 g) and TFE (32 g) were charged thereto, and the mixture was heated to 80°C with stirring at 600 rpm. TFE and PMVE were injected until the pressure in the reactor reached 1.2 MPa [gauge], and an aqueous ammonium persulfate solution (2.5 mass%, 7 ml) was added to initiate polymerization. Since the pressure in the reactor decreased as the polymerization started, TFE and PMVE were alternately added to keep a constant pressure. Upon injection of 80 g of TFE and 63 g of PMVE, the reactor was cooled to terminate the polymerization reaction. The polymerization time was 173 minutes.

In the aqueous dispersion D, the content of the fluorinated polymer 1C was 0.4 mass% to the total mass of the aqueous dispersion D.

The amount of the monomer used for the polymerization was 25.1 parts by mass based on the amount of the aqueous medium in the aqueous dispersion D used for the polymerization being 100 parts by mass.

The aqueous dispersion D contained substantially no emulsifier. Specifically, the contents of the surfactant A and compounds represented by the formulae (S1) to (S4) were measured in the same manner as for the aqueous dispersion B. In production of the aqueous dispersion D, an emulsifier other than the surfactant A and the compounds represented by the formulae (S1) to (S4) was not formed from the components used for production of the aqueous dispersion D nor used and thus not contained in aqueous dispersion D.

The gas remaining in the reactor was recovered, and the liquid was withdrawn. The liquid was taken as aqueous dispersion 3 (second aqueous dispersion). The aqueous dispersion 2 is a dispersion having particles (average particle size: 174.1 nm) containing fluorinated polymer 2C dispersed in the aqueous medium and had a solid content concentration of 11.5 mass%.

The content of the emulsifier in the aqueous dispersion 2 was 100 mass ppm or less. Specifically, the contents of the surfactant A and the compounds represented by the formulae (S1) to (S4) were measured in the same manner as for the aqueous dispersion B. In production of the aqueous dispersion 2, an emulsifier other than the surfactant A and the compounds represented by the formulae (S1) to (S4) was not formed from the components used for production of the aqueous dispersion 2 nor used and thus not contained in the aqueous dispersion 2.

An aqueous aluminum sulfate solution was added to the aqueous dispersion 2 to conduct agglomeration. The obtained agglomerate was washed with water and dried to obtain solid composition 2 containing a rubber-like fluorinated copolymer.

The obtained solid composition 2 was analyzed by NMR and as a result, PMVE units/TFE units=34/66 (molar ratio).

[Stock solution E]

Fluorinated polymer 1E was produced by polymerization in the same manner as for production of the stock solution A except that the amounts of the respective components were properly changed, to obtain stock solution E. The stock solution E was freeze-agglomerated and subjected to filtration, and the obtained fluorinated polymer 1E was analyzed by NMR and as a result, PMVE units/TFE units=32/68 (molar ratio).

[Stock solution F]

Stock solution F was produced in the same manner as for production of the stock solution B except that the stock solution E was used instead of the stock solution A.

[Ex. 3]

Into a stainless steel pressure resistant reactor having an internal capacity of 2.2 L, equipped with an anchor blade, the stock solution F (1000 g) and ultrapure water (182 g) were charged to obtain aqueous dispersion F (first aqueous dispersion). PMVE (90 g) and TFE (18 g) were charged thereto, and the mixture was heated to 80°C with stirring at 600 rpm. TFE and PMVE were injected until the pressure in the reactor reached 1.5 MPa [gauge], and an aqueous ammonium persulfate solution (0.5 mass%, 16 ml) was added to initiate polymerization. Since the pressure in the reactor decreased as the polymerization started, TFE and PMVE were alternately added to keep a constant pressure. Upon addition of 6.0 g of TFE, C4DI (2.0 g) and ultrapure water (10 cc) were injected. Upon injection of 154 g of TFE and 133 g of PMVE, the reactor was cooled to terminate the polymerization reaction. The polymerization time was 300 minutes.

In the aqueous dispersion F, the content of the fluorinated polymer 1E was 0.4 mass% to the total mass of the aqueous dispersion F.

The amount of the monomer used for the polymerization was 40.6 parts by mass based on the amount of the aqueous medium in the aqueous dispersion F used for the polymerization being 100 parts by mass.

The aqueous dispersion F contained substantially no emulsifier. Specifically, the contents of the surfactant A and compounds represented by the formulae (S1) to (S4) were measured in the same method as for the aqueous dispersion B. In production of the aqueous dispersion F, an emulsifier other than the surfactant A and the compounds represented by the formulae (S1) to (S4) was not formed from the components used for production of the aqueous dispersion F nor used and thus not contained in the aqueous dispersion F.

The gas remaining in the reactor was recovered, and the liquid was withdrawn. The liquid was taken as aqueous dispersion 3. The aqueous dispersion 3 is a dispersion having particles (average particle size: 89.9 nm) containing fluorinated polymer 2E dispersed in the aqueous medium and had a solid content concentration of 19.3 mass%.

The content of the emulsifier in the aqueous dispersion 3 was 100 mass ppm or less. Specifically, the contents of the surfactant A and the compounds represented by the formulae (S1) to (S4) were measured in the same method for the aqueous dispersion B. In production of the aqueous dispersion 3, an emulsifier other than the surfactant A and the compounds represented by the formulae (S1) to (S4) was not formed from the components used for production of the aqueous dispersion 3 nor used and thus not contained in the aqueous dispersion 3.

An aqueous aluminum sulfate solution was added to the aqueous dispersion to conduct agglomeration. The obtained agglomerate was washed with water and dried to obtain solid composition 3 containing a rubber-like fluorinated copolymer.

The obtained solid composition 3 was analyzed by NMR and as a result, PMVE units/TFE units=35/65 (molar ratio). The iodine content to the total mass of the fluorinated polymer 1E and the fluorinated polymer 2E was 0.04 mass%.

[Stock solution G]

The fluorinated polymer 1G was polymerized in the same manner as for production of the stock solution A except that the amounts of the respective components were properly changed, to obtain stock solution G. The stock solution G was freeze-agglomerated and subjected to filtration, and the obtained fluorinated polymer 1G was analyzed by NMR and as a result, PMVE units/TFE units=32/68 (molar ratio).

[Stock solution H]

Stock solution H was produced in the same manner as for production of the stock solution B except that the stock solution G was used instead of the stock solution A.

[Ex. 4]

Into a stainless steel pressure resistant reactor having an internal capacity of 2.2 L, equipped with an anchor blade, the stock solution H (1000 g) and ultrapure water (182 g) were charged to obtain aqueous dispersion H (first aqueous dispersion). PMVE (90 g) and TFE (18 g) were charged thereto, and the mixture was heated to 75°C with stirring at 600 rpm. TFE and PMVE were injected until the pressure in the reactor reached 1.5 MPa [gauge], and an aqueous ammonium persulfate solution (0.5 mass%, 16 ml) was added to initiate polymerization. Since the pressure in the reactor decreased as the polymerization started, TFE and PMVE were alternately added to keep a constant pressure. Upon addition of 6.0 g of TFE, C4DI (2.0 g) and ultrapure water (10 cc) were injected. Upon injection of 160 g of TFE and 133 g of PMVE, the reactor was cooled to terminate the polymerization reaction. The polymerization time was 440 minutes.

The content of the fluorinated polymer 1G was 0.4 mass% to the total mass of the aqueous dispersion H.

The amount of the monomer used for the polymerization was 40.6 parts by mass based on the amount of the aqueous medium in the aqueous dispersion H used for the polymerization being 100 parts by mass.

The aqueous dispersion H contained substantially no emulsifier. Specifically, the contents of the surfactant A and compounds represented by the formulae (S1) to (S4) were measured in the same manner as for the aqueous dispersion. In production of the aqueous dispersion H, an emulsifier other than the surfactant A and the compounds represented by the formulae (S1) to (S4) was not formed from the components used for production of the aqueous dispersion H nor used and thus not contained in the aqueous dispersion H.

The gas remaining in the reactor was recovered, and the liquid was withdrawn. The liquid was taken as aqueous dispersion 4 (second aqueous dispersion). The aqueous dispersion 4 is a dispersion having particles (average particle size: 90.5 nm) containing fluorinated polymer 2G dispersed in the aqueous medium and had a solid content concentration of 20.1 mass%.

The content of the emulsifier in the aqueous dispersion 4 was 100 mass ppm or less. Specifically, the contents of the surfactant A and the compounds represented by the formulae (S1) to (S4) were measured in the same manner as for the aqueous dispersion B. In production of the aqueous dispersion 4, an emulsifier other than the surfactant A and the compounds represented by the formulae (S1) to (S4) was not formed from the components used for production of the aqueous dispersion 4 nor used and thus not contained in the aqueous dispersion 4.

An aqueous aluminum sulfate solution was added to the aqueous dispersion to conduct agglomeration. The obtained agglomerate was washed with water and dried to obtain solid composition 4 containing a rubber-like fluorinated copolymer.

The obtained solid composition 4 was analyzed by NMR and as a result, PMVE units/TFE units=34/66 (molar ratio). The iodine content to the total mass of the fluorinated polymer 1H and the fluorinated polymer 2H was 0.04 mass%.

[Stock solution P]

Fluorinated polymer 1P was produced by polymerization in the same manner as for production of the stock solution A except that the amounts of the respective components were properly changed, to obtain stock solution P. The stock solution P was freeze-agglomerated and subjected to filtration, and the obtained fluorinated polymer 1N was analyzed by NMR and as a result, PMVE units/TFE units=34/66 (molar ratio).

[Stock solution Q]

Stock solution Q was produced in the same manner as for production of the stock solution B except that the stock solution P was used instead of the stock solution A.

[Ex. 5]

Into a stainless steel pressure resistant reactor having an internal capacity of 2.2 L, equipped with an anchor blade, the stock solution Q (850 g), ultrapure water (332 g) and disodium hydrogen phosphate dodecahydrate (0.11 g) were charged to obtain aqueous dispersion Q (first aqueous dispersion). PMVE (90 g), TFE (18 g) and 8CNVE (1.1 g) were charged thereto, and the mixture was heated to 80°C with stirring at 600 rpm. TFE and PMVE were injected until the pressure in the reactor reached 1.5 MPa [gauge], and an aqueous ammonium persulfate solution (3 mass%, 18 ml) was added to initiate polymerization. Since the pressure in the reactor decreased as the polymerization started, TFE and PMVE were alternately added to keep a constant pressure. Every addition of 16 g of TFE, 12 g of PMVE and 1.26 g of 8CNVE were added. An aqueous ammonium persulfate solution was optionally added so as to keep a constant polymerization rate. Upon injection of 160 g of TFE, 108 g of PMVE and 12.6 g of 8CNVE, the reactor was cooled to terminate the polymerization reaction. The polymerization time was 130 minutes. The total amount of the 3 mass% aqueous ammonium persulfate solution added was 24 ml.

The content of the fluorinated polymer 1P was 0.6 mass% to the total mass of the aqueous dispersion Q.

The amount of the monomer used for the polymerization was 23 parts by mass based on the amount of the aqueous medium in the aqueous dispersion Q used for the polymerization being 100 parts by mass.

The aqueous dispersion Q contained substantially no emulsifier. Specifically, the contents of the surfactant A and the compounds represented by the formulae (S1) to (S4) were measured in the same method for the aqueous dispersion B. In production of the aqueous dispersion Q, an emulsifier other than the surfactant A and the compounds represented by the formulae (S1) to (S4) was not formed from the components used for production of the aqueous dispersion Q nor used and thus not contained in the aqueous dispersion Q.

The gas remaining in the reactor was recovered, and the liquid was withdrawn. The liquid was taken as aqueous dispersion 5 (second aqueous dispersion). The aqueous dispersion 5 is a dispersion having particles (average particle size: 45.5 nm) containing fluorinated polymer 2P dispersed in the aqueous medium and had a solid content concentration of 19.1 mass%.

The content of the emulsifier in the aqueous dispersion 5 was 100 mass ppm or less. Specifically, the contents of the surfactant A and the compounds represented by the formulae (S1) to (S4) were measured in the same method for the aqueous dispersion B. In production of the aqueous dispersion 5, an emulsifier other than the surfactant A and the compounds represented by the formulae (S1) to (S4) was not formed from the components used for production of the aqueous dispersion 5 nor used and thus not contained in the aqueous dispersion 5.

A 3 mass% aqueous nitric acid solution was added to the aqueous dispersion to conduct agglomeration. The obtained agglomerate was washed with water and dried to obtain solid composition 5 containing a rubber-like fluorinated copolymer.

The obtained solid composition 5 was analyzed by NMR and as a result, PMVE units/TFE units/8CNVE units=68.3/31.2/0.5 (molar ratio).

[Stock solution K]

Into a 1.0 L glass reactor, ultrapure water (593 g) and MMA (methyl methacrylate, 2.8 g) were charged and heated to 60°C with stirring at 500 rpm. Then, an aqueous ammonium persulfate solution (10 mass%, 6.0 cc) was added to conduct polymerization for 60 minutes. After completion of the polymerization, the liquid was withdrawn and taken as stock solution K.

The stock solution K was heated to remove water, and the residue was dried by heating to obtain hydrocarbon polymer (polyMMA).

[Stock solution L]

PuroliteA300 ((manufactured by Purolite), anion exchange resin, 20 g) was added to the stock solution K (490 g). 60 Minutes after start of stirring, the stock solution was separated from the ion exchange resin by filtration to obtain stock solution L.

The stock solution L had particles (average particle size: 116 nm) of the hydrocarbon polymer (polyMMA) dispersed in the aqueous medium, and had a content of the hydrocarbon polymer as calculated from the amount of MMA charged of 0.47 mass% to the total mass of the stock solution L.

[Ex. 6]

Into a stainless steel pressure resistant reactor having an internal capacity of 2.2 L, equipped with an anchor blade, the stock solution L (3.91 g) and ultrapure water (1162 g) were charged to obtain aqueous dispersion L. The aqueous dispersion L was heated to 80°C with stirring at 600 rpm, and PMVE (72 g) and TFE (14 g) were charged thereto. Then, an aqueous ammonium persulfate solution (20 mass%, 5 mL) was added to initiate polymerization. Since the pressure in the reactor decreased as the polymerization started, TFE and PMVE were further added to keep a constant pressure of 1.2 MPa [gauge]. Upon injection of 160 g of TFE and 133 g of PMVE, the reactor was cooled to terminate the polymerization reaction. The polymerization time was 411 minutes.

The gas remaining in the reactor was recovered, and the liquid was withdrawn. This liquid was taken as aqueous dispersion 6. The aqueous dispersion 6 is a dispersion having particles (average particle size: 195.2 nm) that contains fluorinated polymer 2L dispersed in the aqueous medium and having a solid content concentration of 20.7 mass%. An aqueous aluminum sulfate solution was added to the aqueous dispersion to conduct agglomeration. The obtained agglomerate was washed with water and dried to obtain solid composition 6 containing rubber like fluorinated polymer 2L.

[Ex. 7]

A stainless steel pressure resistant reactor having an internal capacity of 2.1 L, equipped with an anchor blade, was deaerated, and the gas phase was replaced with nitrogen, and with stirring by the anchor blade at 600 rpm, ultrapure water (1004 g), a 30 mass% solution (80.1 g) of $C_2F_5OCF_2CF_2OCF_2COONH_4$ (surfactant A) as an emulsifier, and a 5 mass% aqueous solution (10.49 g) of disodium hydrogen phosphate dodecahydrate were charged to obtain aqueous dispersion M. PMVE (72 g) and TFE (14 g) were injected into the reactor, and the internal temperature was increased to 80°C. Then, an aqueous ammonium persulfate solution (1.0 mass%, 20 mL) was added to initiate polymerization. Since the pressure in the reactor decreased as the polymerization started, TFE and PMVE were further added to keep a constant pressure of 1.2 MPa [gauge]. Upon injection of 160 g of TFE and 133 g of PMVE, the reactor was cooled to terminate the polymerization reaction. The polymerization time was 262 minutes.

The gas remaining in the reactor was recovered, and the liquid was withdrawn. This liquid was taken as aqueous dispersion 7. The aqueous dispersion 7 is a dispersion having particles (average particle size: 80.0 nm) that contains fluorinated polymer 2M dispersed in the aqueous medium and having a solid content concentration of 20.0 mass%. An aqueous aluminum sulfate solution was added to the aqueous dispersion to conduct agglomeration. The obtained agglomerate was washed with water and dried to obtain solid composition 7 containing rubber like fluorinated polymer 2M.

[Evaluation]

<2 mass% loss temperature>

10 mg of the solid composition (sample) was weighed on an aluminum pan and heated at 10°C/min from 30°C to 550°C in an air atmosphere. The temperature at which the mass reduced to 98% based on the mass of the sample before heating being 100%, was taken as the 2 mass% loss temperature. The higher the 2 mass% loss temperature is, the more excellent heat resistance will be achieved.

As the apparatus, NEXTA STA series STA200 manufactured by Hitachi High-Tech Corporation was used.

<Water dispersion stability>

The following sedimentation ratio was measured after 30 g of each of the aqueous dispersions 1 to 7 was subjected to high-speed rotation at 2000 rpm for 180 minutes using a disc turbine having a diameter of 60 mm, and water dispersion stability was evaluated. The lower the sedimentation ratio is, the more excellent the water dispersion stability tends to be.

Sedimentation ratio (%)=100 $\times$ precipitated agglomerate (g)/(30 (g) $\times$ fluorinated polymer concentration (mass %)/100)

Table 5

| | | First aqueous dispersion | | | Second aqueous disperion | | | | Solid composition |
|---|---|---|---|---|---|---|---|---|---|
| | Stock solution | Type | Use of sufactant A at the time of production | Emulsifier | Type | Solid content concenration [mass%] | Particle size [nm] | Water dispersion stability (sedimentation ratio) [%] | 2 mass% loss temperature [°C] |
| Ex. 1 | A,B | B | Not used | Not contained | 1 | 11.5 | 144.1 | 30.0 | 357 |
| Ex. 2 | C,D | D | Not used | Not contained | 3 | 20.4 | 70.3 | 20.0 | - |

(continued)

| | | First aqueous dispersion | | | Second aqueous disperion | | | | Solid composition |
|---|---|---|---|---|---|---|---|---|---|
| | Stock solution | Type | Use of sufactant A at the time of production | Emulsifier | Type | Solid content concenration [mass%] | Particle size [nm] | Water dispersion stability (sedimentation ratio) [%] | 2 mass% loss temperature [°C] |
| Ex. 3 | E,F | F | Not used | Not contained | 4 | 27.6 | 96.0 | 30.0 | - |
| Ex. 4 | G,H | H | Not used | Not contained | 5 | 28.4 | 97.2 | 30.0 | - |
| Ex. 5 | P,Q | Q | Not used | Not contained | 8 | 19.1 | 45.5 | 10.0 | - |
| Ex. 6 | K,L | L | Not used | Not contained | 6 | 20.7 | 195.2 | 80.0 | - |
| Ex. 7 | - | M | Used | Contained | 7 | 20.0 | 80.0 | 20.0 | - |

In Table 5, the content of the formula (S2) means the total content of the compounds of the formula (S2) wherein n1 is an integer of 3 to 19, to the total mass of the solid composition, the content of the formula (S3) means the total content of the compounds of the formula (S3) wherein n2 is an integer of 4 to 20, to the total mass of the solid composition, and the content of the formula (S4) means the total content of the compounds of the formula (S4) wherein n2 is an integer of 4 to 20, to the total mass of the solid composition.

In production of the solid compositions 1 to 5, an emulsifier other than the compounds represented by the formulae (S1) to (S4) and the surfactant A was not formed from the components used for the production of the solid composition 1 to 5 nor used and thus not contained in the solid compositions 1 to 5.

Table 6

| | | Ex. 1 | Ex. 2 | Ex. 3 | Ex. 4 | Ex. 5 | Ex. 6 | Ex. 7 |
|---|---|---|---|---|---|---|---|---|
| Solid composition | | 1 | 3 | 4 | 5 | 0 | 6 | 7 |
| Content (mass ppb) of the formula (S1) | n=3 | 11 | 0 | 0 | 0 | 0 | 12 | 14 |
| | n=4 | 0 | 0 | 0 | 0 | 5 | 0 | 0 |
| | n=5 | 0 | 0 | 0 | 0 | 4 | 0 | 0 |
| | n=6 | 0 | 0 | 0 | 0 | 4 | 0 | 0 |
| | n=7 | 0 | 0 | 0 | 0 | 2 | 15 | 0 |
| | n=8 | 0 | 0 | 0 | 0 | 2 | 0 | 0 |
| | n=9 | 0 | 0 | 2 | 0 | 2 | 3 | 0 |
| | n=10 | 0 | 0 | 1 | 0 | 10 | 0 | 0 |
| | n=11 | 1 | 4 | 12 | 0 | 1 | 180 | 0 |
| | n=12 | 0 | 0 | 0 | 0 | 3 | 0 | 0 |
| | n=13 | 0 | 6 | 0 | 5 | 0 | 300 | 0 |
| | n=14 | 0 | 0 | 0 | 0 | 0 | 0 | 0 |
| | n=15 | 1 | 0 | 0 | 3 | 10 | 240 | 0 |
| | n=16 | 0 | 0 | 0 | 0 | 0 | 0 | 0 |
| | n=17 | 0 | 0 | 0 | 0 | 0 | 9 | 0 |
| | n=18 | 0 | 0 | 0 | 0 | 0 | 0 | 0 |
| | n=19 | 0 | 0 | 0 | 0 | 0 | 0 | 0 |

(continued)

|  | Ex. 1 | Ex. 2 | Ex. 3 | Ex. 4 | Ex. 5 | Ex. 6 | Ex. 7 |
|---|---|---|---|---|---|---|---|
| Content (mass ppb) of the formula (S2) | 0 | 0 | 0 | 0 | 13 | 0 | 0 |
| Content (mass ppb) of the formula (S3) | 0 | 0 | 0 | 0 | 0 | 0 | 0 |
| Content (mass ppb) of the formula (S4) | 0 | 0 | 0 | 0 | 0 | 0 | 0 |
| Content (mass ppb) of surfactant A | 0 | 0 | 0 | 0 | 0 | 0 | >250 |
| Total (ppb) | 14 | 10 | 15 | 8 | 56 | 759 | >250 |

<Processability evaluation results>

Table 7

|  | Ex. 1 | Ex. 2 | Ex. 3 | Ex. 4 | Ex. 5 | Ex. 6 | Ex. 7 |
|---|---|---|---|---|---|---|---|
| Emulsifier | Not contained | Not contained | Not contained | Not contained | Not contained | Contained | Contained |
| G' | 1100 | 927 | 673 | 558 | 589 | 367 | 1000 |
| Roll winding property | A | A | A | A | A | C | C |
| Roll surface temperature | A | A | A | B | B | B | A |
| Processability | ◎ | ◎ | ◎ | ○ | ○ | × | Δ |

It was confirmed that according to the method for producing a fluorinated elastomer of the present invention, a fluorinated elastomer excellent in water dispersion stability can be efficiently produced without using an emulsifier, while an aqueous medium with a small environmental impact is used (Ex. 1 to 5).

Whereas in Ex. 6, the obtained fluorinated elastomer was inferior in the water dispersion stability. Further, Ex. 7 corresponds to a method for producing a fluorinated elastomer using an emulsifier, whereas in each of Ex. 1 to 5, it was confirmed that the efficiency and the water dispersion stability equal to those with use of an emulsifier were obtained even substantially without using an emulsifier.

The entire disclosure of Japanese Patent Application No. 2023-117444 filed on July 19, 2023 including specification, claims and summary is incorporated herein by reference in its entirety.

**Claims**

1. A method for producing a fluorinated elastomer, which comprises,

in an aqueous dispersion that contains substantially no water-soluble emulsifier, and contains a first fluorinated polymer having units based on tetrafluoroethylene and units based on a perfluoro(alkyl vinyl ether) and an aqueous medium,
polymerizing a monomer containing tetrafluoroethylene and a perfluoro(alkyl vinyl ether) to produce a second fluorinated polymer,
wherein
in the first fluorinated polymer, a content of the units based on a perfluoro(alkyl vinyl ether) is 20 to 95 mol% to a total content of the units based on tetrafluoroethylene and the units based on a perfluoro(alkyl vinyl ether),
in the second fluorinated polymer, a content of the units based on a perfluoro(alkyl vinyl ether) is 20 to 95 mol% to a total content of the units based on tetrafluoroethylene and the units based on a perfluoro(alkyl vinyl ether), and
before start of the polymerization of the monomer, a content of the first fluorinated polymer is 0.01 to 4.0 mass% to a total mass of the aqueous dispersion.

2. The method for producing a fluorinated elastomer according to Claim 1,

wherein

the monomer consists solely of tetrafluoroethylene and a perfluoro(alkyl viny ether), or
the monomer comprises tetrafluoroethylene and a perfluoro(alkyl viny ether) and contains at least one type of monomer selected from the groups consisting of a monomer having two or more polymerizable unsaturated bonds, a monomer having one or more of at least one type of atom selected from the group consisting of a chlorine atom, a bromine atom and an iodine atom, and a monomer having a nitrile group.

3. The method for producing a fluorinated elastomer according to Claim 1 or 2, wherein the amount of the monomer used is 1 to 80 parts by mass per 100 parts by mass of the aqueous medium used.

4. The method for producing a fluorinated elastomer according to Claim 1 or 2, wherein the monomer is polymerized in the presence of a polymerization initiator.

5. An aqueous dispersion containing an aqueous medium and particles that contain a fluorinated polymer, wherein

the particles have an average particle size of 1 $\mu$m or less,
the particles have units based on tetrafluoroethylene and units based on a perfluoro(alkyl vinyl ether),
the fluorinated polymer has at least one of a chlorine atom, a bromine atom, an iodine atom and a nitrile group in at least one of terminal ends and side chains, and
the content of an emulsifier is 100 mass ppm or less to the total mass of the aqueous dispersion.

6. The aqueous dispersion according to Claim 5, wherein

the particles have as units only the units based on tetrafluoroethylene and the units based on a perfluoro(alkyl vinyl ether), or
the particles have the units based on tetrafluoroethylene and the units based on a perfluoro(alkyl vinyl ether), and have at least one type of units selected from the group consisting of units based on a monomer having two or more polymerizable unsaturated bonds, units based on a monomer having one or more of at least one type of atom selected from the group consisting of a chlorine atom, a bromine atom and an iodine atom, and units based on a monomer having a nitrile group.

7. A solid composition comprising a fluorinated polymer,

which has units based on tetrafluoroethylene and units based on a perfluoro(alkyl vinyl ether),
contains substantially no emulsifier, and
has a storage elastic modulus G' of 200 to 1200 kPa.

8. The solid composition according to Claim 7, wherein the fluorinated polymer has at least one of a chlorine atom, a bromine atom, an iodine atom and a nitrile group in at least one of terminal ends and side chains.

9. A crosslinked rubber article, which is formed by crosslinking the solid composition as defined in Claim 8.

## INTERNATIONAL SEARCH REPORT

| International application No. |
| --- |
| **PCT/JP2024/025755** |

| A. | CLASSIFICATION OF SUBJECT MATTER |
| --- | --- |

*C08F 2/16*(2006.01)i; *C08F 2/44*(2006.01)i; *C08F 214/26*(2006.01)i; *C08F 216/14*(2006.01)i
FI:  C08F2/16; C08F214/26; C08F216/14; C08F2/44 C

According to International Patent Classification (IPC) or to both national classification and IPC

| B. | FIELDS SEARCHED |
| --- | --- |

Minimum documentation searched (classification system followed by classification symbols)

C08F2/16; C08F2/44; C08F214/26; C08F216/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2016-500390 A (E.I. DU PONT DE NEMOURS AND COMPANY) 12 January 2016 (2016-01-12)<br>claims, paragraphs [0002]-[0003], [0017]-[0023], [0025]-[0027], examples | 1-9 |
| X | WO 2020/196779 A1 (AGC INC.) 01 October 2020 (2020-10-01)<br>claims, paragraphs [0004]-[0005], [0033], examples | 1-9 |
| A | JP 2000-239470 A (AUSIMONT SPA) 05 September 2000 (2000-09-05)<br>entire text | 1-9 |
| A | JP 08-073689 A (ASAHI GLASS COMPANY, LIMITED) 19 March 1996 (1996-03-19)<br>entire text | 1-9 |
| P, A | WO 2024/128265 A1 (AGC INC.) 20 June 2024 (2024-06-20)<br>entire text | 1-9 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 September 2024** | **08 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

29

## INTERNATIONAL SEARCH REPORT
### Information on patent family members

International application No.

**PCT/JP2024/025755**

| Patent document cited in search report | | | Publication date (day/month/year) | Patent family member(s) | | | Publication date (day/month/year) |
|---|---|---|---|---|---|---|---|
| JP | 2016-500390 | A | 12 January 2016 | US | 2015/0210787 | A1 | |
| | | | | claims, paragraphs [0002]-[0004], [0023]-[0034], [0036]-[0040], examples | | | |
| | | | | WO | 2014/099453 | A1 | |
| | | | | EP | 2935370 | A1 | |
| WO | 2020/196779 | A1 | 01 October 2020 | US | 2021/0403623 | A1 | |
| | | | | claims, paragraphs [0005]-[0006], [0075]-[0076], examples | | | |
| | | | | EP | 3950748 | A1 | |
| | | | | CN | 113631599 | A | |
| JP | 2000-239470 | A | 05 September 2000 | US | 6395834 | B1 | |
| | | | | entire text | | | |
| | | | | EP | 1031607 | A1 | |
| JP | 08-073689 | A | 19 March 1996 | (Family: none) | | | |
| WO | 2024/128265 | A1 | 20 June 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022052498 A
- WO 2018181904 A
- JP 2016537499 A
- US 6841616 B, Wille
- US 7977438 B, Brothers
- US 5674959 A
- US 5717036 A
- US 4694045 A
- WO 0056694 A
- JP 2023117444 A